(19) Europäisches Patentamt / European Patent Office / Office européen des brevets

(11) **EP 4 004 906 B1**

(12) **EUROPEAN PATENT SPECIFICATION**

(45) Date of publication and mention
of the grant of the patent:
**19.02.2025 Bulletin 2025/08**

(21) Application number: **20758024.2**

(22) Date of filing: **30.07.2020**

(51) International Patent Classification (IPC):
***G10L 15/06*** (2013.01)

(52) Cooperative Patent Classification (CPC):
**G10L 15/063**

(86) International application number:
**PCT/US2020/044354**

(87) International publication number:
**WO 2021/022094 (04.02.2021 Gazette 2021/05)**

(54) **PER-EPOCH DATA AUGMENTATION FOR TRAINING ACOUSTIC MODELS**

DATENERGÄNZUNG NACH EPOCHE ZUM TRAINIEREN VON AKUSTISCHEN MODELLEN

AUGMENTATION DE DONNÉES PAR ÉPOQUE POUR L'APPRENTISSAGE DE MODÈLES ACOUSTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2019 US 201962880117 P**
**23.07.2020 US 202016936673**

(43) Date of publication of application:
**01.06.2022 Bulletin 2022/22**

(73) Proprietor: **Dolby Laboratories Licensing Corporation**
**San Francisco, CA 94103 (US)**

(72) Inventors:
• **CARTWRIGHT, Richard J.**
**Sydney, NSW 2060 (AU)**
• **HINES, Christopher Graham**
**Sydney, NSW 2060 (AU)**

(74) Representative: **Dolby International AB**
**Patent Group Europe**
**77 Sir John Rogerson's Quay**
**Block C**
**Grand Canal Docklands**
**Dublin, D02 VK60 (IE)**

(56) References cited:
**US-A1- 2017 040 016     US-A1- 2017 200 092**
**US-A1- 2018 260 793     US-A1- 2019 043 482**

• **TERRANCE DEVRIES ET AL: "Workshop track -ICLR 2017 DATASET AUGMENTATION IN FEATURE SPACE", 17 February 2017 (2017-02-17), XP055617306, Retrieved from the Internet <URL:https://arxiv.org/pdf/1702.05538. pdf> [retrieved on 20190902]**

**Description**

<u>TECHNICAL FIELD</u>

The invention pertains to systems and methods for implementing speech analytics (e.g., wakeword detection, voice activity detection, speech recognition, or speaker (talker) recognition) and/or noise suppression, with training. Some embodiments pertain to systems and methods for training acoustic models (e.g., to be implemented by smart audio devices).

<u>BACKGROUND</u>

Herein, we use the expression "smart audio device" to denote a smart device which is either a single purpose audio device or a virtual assistant (e.g., a connected virtual assistant). A single purpose audio device is a device (e.g., a TV or a mobile phone) including or coupled to at least one microphone (and optionally also including or coupled to at least one speaker), and/or at least one speaker (and optionally also including or coupled to at least one microphone), and which is designed largely or primarily to achieve a single purpose. Although a TV typically can play (and is thought of as being capable of playing) audio from program material, in most instances a modern TV runs some operating system on which applications run locally, including the application of watching television. Similarly, the audio input and output in a mobile phone may do many things, but these are serviced by the applications running on the phone. In this sense, a single purpose audio device having speaker(s) and microphone(s) is often configured to run a local application and/or service to use the speaker(s) and microphone(s) directly. Some single purpose audio devices may be configured to group together to achieve playing of audio over a zone or user configured area.

A virtual assistant (e.g., a connected virtual assistant) is a device (e.g., a smart speaker or voice assistant integrated device) including or coupled to at least one microphone (and optionally also including or coupled to at least one speaker) and which may provide an ability to utilize multiple devices (distinct from the virtual assistant) for applications that are in a sense cloud enabled or otherwise not implemented in or on the virtual assistant itself. Virtual assistants may sometimes work together, e.g., in a very discrete and conditionally defined way. For example, two or more virtual assistants may work together in the sense that one of them, i.e., the one which is most confident that it has heard a wakeword, responds to the word. Connected devices may form a sort of constellation, which may be managed by one main application which may be (or include or implement) a virtual assistant.

Herein, "wakeword" is used in a broad sense to denote any sound (e.g., a word uttered by a human, or some other sound), where a smart audio device is configured to awake in response to detection of ("hearing") the sound (using at least one microphone included in or coupled to the smart audio device, or at least one other microphone). In this context, to "awake" denotes that the device enters a state in which it awaits (i.e., is listening for) a sound command.

Herein, the expression "wakeword detector" denotes a device configured (or software, e.g., a lightweight piece of code, for configuring a device) to search (e.g., continuously) for alignment between realtime sound (e.g., speech) features and a pretrained model. Typically, a wakeword event is triggered whenever it is determined by a wakeword detector that wakeword likelihood (probability that a wakeword has been detected) exceeds a predefined threshold. For example, the threshold may be a predetermined threshold which is tuned to give a good compromise between rates of false acceptance and false rejection. Following a wakeword event, a device may enter a state (i.e., an "awakened" state or a state of "attentiveness") in which it listens for a command and passes on a received command to a larger, more computationally-intensive device (e.g., recognizer) or system.

An orchestrated system including multiple smart audio devices requires some understanding of the location of a user in order to at least: (a) select a best microphone for voice pickup; and (b) emit audio from sensible locations. Existing techniques include selecting a single microphone (which captures audio indicative of high wakeword confidence) and acoustic source localization algorithms using multiple synchronous microphones to estimate the coordinates of the user relative to the devices.

More generally, when training audio machine learning systems (e.g., wakeword detectors, voice activity detectors, speech recognition systems, speaker recognizers, or other speech analytics systems, and/or noise suppressors), especially those based on deep learning, it is often essential to augment the clean training dataset by adding reverberation, noise and other conditions that will be encountered by the system when running in the real world.

Speech analytics systems (for example, noise suppression systems, wakeword detectors, speech recognizers, and speaker (talker) recognizers) are often trained from a corpus of training examples. For example, a speech recognizer may be training from a large number of recordings of people uttering individual words or phrases along with a transcription or label of what was said.

In such training systems, it is often desirable to record clean speech (for example in a low-noise and low reverberation environment such as a recording studio or sound booth using a microphone situated close to the talker's mouth) because such clean speech corpora can be efficiently collected at scale. However, once trained, such speech analytics systems rarely perform well in real-world conditions that do not closely match the conditions under which the training set was collected. For example, the speech from a person speaking in a room in a typical home or office to a microphone located several metres away will typically be polluted by noise and reverberation.

In such scenarios it is also common that one or more devices (e.g., smart speakers) are playing music (or other sound, e.g., podcast, talkback radio, or phone call content) as the person speaks. Such music (or other sound) may be considered echo and may be cancelled, suppressed or managed by an echo management system that runs ahead of the speech analytics system. However, such echo management systems are not perfectly able to remove echo from the recorded microphone signal and echo residuals may be present in the signal presented to the speech analytics system.

Furthermore, speech analytics systems often need to run without complete knowledge of the frequency response and sensitivity parameters of the microphones. These parameters may also change over time as microphones age and as talkers move their location within the acoustic environment.

This can lead to a scenario where there is substantial mismatch between the examples shown to the speech analytics system during training and the actual audio shown to the system in the real world. These mismatches in noise, reverberation, echo, level, equalization and other aspects of the audio signal often reduce the performance of a speech analytics system trained on clean speech. It is often desirable, therefore to augment the clean speech training data during the training process by adding noise, reverberation and/or echo and by varying the level and/or equalisation of the training data. This is commonly known in speech technology as "multi-style training."

The conventional approach to multi-style training often involves augmenting PCM data to create new PCM data in a data preparation stage prior to the training process proper. Since the augmented data must be saved to disc, memory, etc., ahead of training, the diversity of the augmentation that can be applied is limited. For example, a 100 GB training set augmented with 10 different sets of augmentation parameters (e.g., 10 different room acoustics) will occupy 1000 GB. This limits the number of distinct augmentation parameters that can be chosen and often leads to overfitting of the acoustic model to the particular set of chosen augmentation parameters leading to suboptimal performance in the real world.

Conventional multi-style training is usually done by augmenting the data in the time domain (for example by convolving with an impulse response) prior to the main training loop and often suffers from severe overfitting due to the limited number of augmented versions of each training vector that can be practically created.

US 2019/043482A1 discloses a method comprising blending near field speech training data with far field speech training data to generate blended speech training data, wherein the far field speech training data is obtained by performing data augmentation processing for the near field speech training data; using the blended speech training data to train a deep neural network to generate a far field recognition acoustic model.

BRIEF DESCRIPTION OF EMBODIMENTS

The invention is as defined by the appended claims.

NOTATION AND NOMENCLATURE

Throughout this disclosure, including in the claims, "speaker" and "loudspeaker" are used synonymously to denote any sound-emitting transducer (or set of transducers) driven by a single speaker feed. A typical set of headphones includes two speakers. A speaker may be implemented to include multiple transducers (e.g., a woofer and a tweeter), all driven by a single, common speaker feed (the speaker feed may undergo different processing in different circuitry branches coupled to the different transducers).

Throughout this disclosure, including in the claims, the expression performing an operation "on" a signal or data (e.g., filtering, scaling, transforming, or applying gain to, the signal or data) is used in a broad sense to denote performing the operation directly on the signal or data, or on a processed version of the signal or data (e.g., on a version of the signal that has undergone preliminary filtering or pre-processing prior to performance of the operation thereon).

Throughout this disclosure including in the claims, the expression "system" is used in a broad sense to denote a device, system, or subsystem. For example, a subsystem that implements a decoder may be referred to as a decoder system, and a system including such a subsystem (e.g., a system that generates X output signals in response to multiple inputs, in which the subsystem generates M of the inputs and the other X - M inputs are received from an external source) may also be referred to as a decoder system.

Throughout this disclosure including in the claims, the term "processor" is used in a broad sense to denote a system or device programmable or otherwise configurable (e.g., with software or firmware) to perform operations on data (e.g., audio data). Examples of processors include a field-programmable gate array (or other configurable integrated circuit or chip set), a digital signal processor programmed and/or otherwise configured to perform pipelined processing on audio data, a graphics processing unit (GPU) configured to perform processing on audio data, a programmable general purpose processor or computer, and a programmable microprocessor chip or chip set.

Throughout this disclosure including in the claims, the term "couples" or "coupled" is used to mean either a direct or indirect connection. Thus, if a first device is said to be coupled to a second device, that connection may be through a direct connection, or through an indirect connection via other devices and connections.

Throughout this disclosure including in the claims, "audio data" denotes data indicative of sound (e.g., speech) captured by at least one microphone, or data generated (e.g., synthesized) so that said data are renderable for playback (by at least one speaker) as sound (e.g., speech) or are useful in training a speech analytics system (e.g., a speech analytics system which operates only in the band energy domain). For example, audio data may be generated so as to be useful as a substitute for data indicative of sound (e.g., speech) captured by at least one microphone. Herein, the expression "training data" denotes audio data which is useful (or intended for use) for training an acoustic model.

Throughout this disclosure including in the claims, the term "adding" (e.g., a step of "adding" augmentation to training data) is used in a broad sense which denotes adding (e.g., mixing or otherwise combining) and approximate implementations of adding.

BRIEF DESCRIPTION OF THE DRAWINGS

Fig. 1 is a diagram of an environment which includes a system including a set of smart audio devices.

Fig. 1A is a flowchart of a conventional multi-style training procedure for an acoustic model.

Fig. 1B is a flowchart of a multi-style training procedure for an acoustic model according to an embodiment of the present invention.

Fig. 2 is a diagram of another environment which includes a user and a system including a set of smart audio devices.

Fig. 3 is a block diagram of elements of a system which may be implemented in accordance with embodiment of the invention.

Fig. 3A is a block diagram of elements of a system which may be implemented in accordance with embodiment of the invention.

Fig. 4 is a set of graphs illustrating an example of fixed spectrum stationary noise addition (augmentation) in accordance with an embodiment of the invention.

Fig. 5 is a graph illustrating an example of an embodiment of the invention which includes microphone equalization augmentation.

Fig. 6 is a flowchart of steps of a training procedure according to an embodiment of the present invention in which the augmentation includes variable spectrum semi-stationary noise addition.

Fig. 7 is a flowchart of steps of a training procedure according to an embodiment of the present invention in which the augmentation includes non-stationary noise addition.

Fig. 8 is a flowchart of a training procedure according to an embodiment of the present invention in which the augmentation implements a simplified reverberation model.

Fig. 9 is a flowchart of a method for augmenting input features (128B), and generating class label data (311-314), for use in training a model in accordance with an embodiment of the present invention. The model classifies time-frequency tiles of the augmented features into speech, stationary noise, non-stationary noise, and reverberation categories, and may be useful for training models for use in noise suppression (including suppression of non-speech sounds).

Fig. 10 is a diagram of four examples of augmented training data (e.g., data 310 generated in accordance with the method of Fig. 9), each of which has been generated by augmenting the same set of training data (a training vector) for use during a different epoch of training of a model.

DETAILED DESCRIPTION OF EMBODIMENTS

Many embodiments of the present invention are technologically possible. It will be apparent to those of ordinary skill in the art from the present disclosure how to implement them. With reference to the Figures, we next describe examples of embodiments of the inventive system and method.

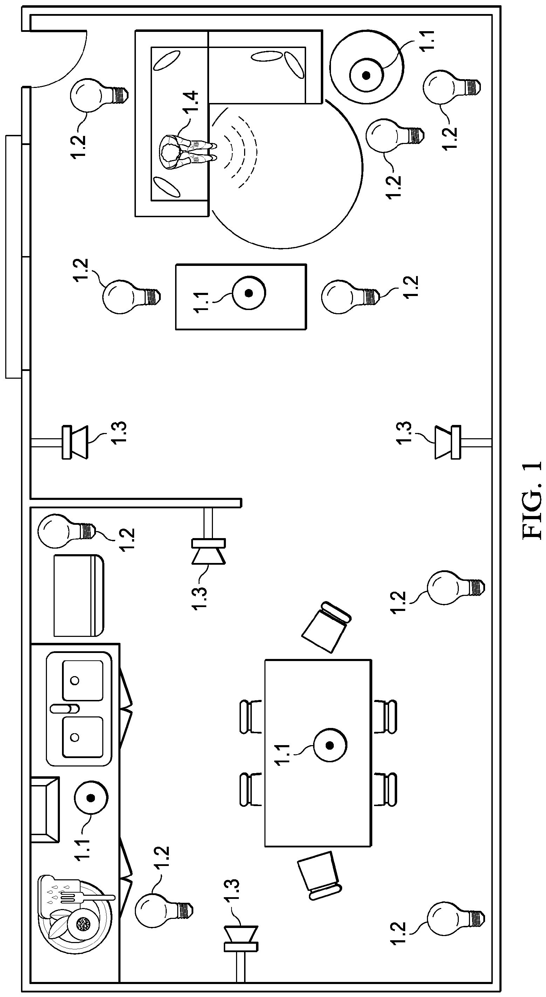

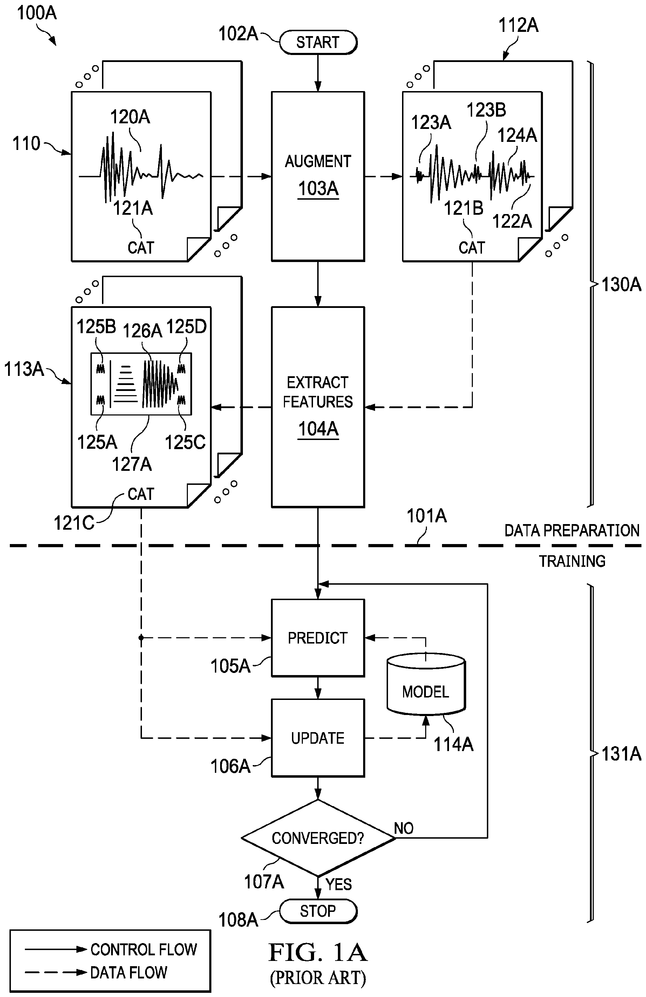

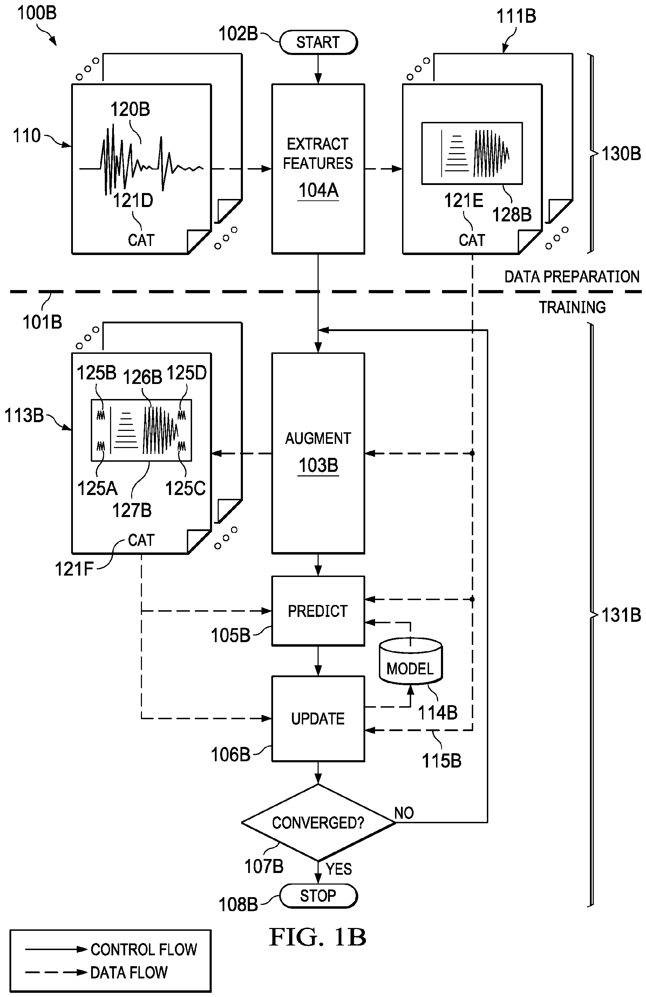

Figure 1 is a diagram of an environment (a living space) which includes a system including a set of smart audio devices (devices 1.1) for audio interaction, speakers (1.3) for audio output, and controllable lights (1.2). In an example, each of the devices 1.1 contains (and/or is coupled to) at least one microphone, so that the environment also includes the microphones, and the microphones provide devices 1.1 a sense of where (e.g., in which zone of the living space) is a user (1.4) who issues a wakeword command (a sound which the devices 1.1 are configured to recognize, under specific circumstances, as a wakeword). The system (e.g., one or more of devices 1.1 thereof) may be configured to implement an embodiment of the present invention. Using various methods, information may be obtained collectively from the devices of Fig. 1 and used to provide a positional estimate of the user who issues (e.g., speaks) the wakeword.

In a living space (e.g., that of Fig. 1), there are a set of natural activity zones where a person would be performing a task or activity, or crossing a threshold. These action areas (zones) are where there may be an effort to estimate the location (e.g., to determine an uncertain location) or context of a user. In the Fig. 1 example, the key zones are

> 1. The kitchen sink and food preparation area (in the upper left region of the living space);
> 2. The refrigerator door (to the right of the sink and food preparation area);
> 3. The dining area (in the lower left region of the living space);
> 4. The open area of the living space (to the right of the sink and food preparation area and dining area);
> 5. The TV couch (at the right of the open area);
> 6. The TV itself;
> 7. Tables; and
> 8. The door area or entry way (in the upper right region of the living space).

In accordance with some embodiments of the invention, a system that estimates (e.g., determines an uncertain estimate of) where a signal (e.g., a wakeword or other signal for attention) arises or originates, may have some determined confidence in (or multiple hypotheses for) the estimate. E.g., if a user happens to be near a boundary between zones of the system's environment, an uncertain estimate of location of the user may include a determined confidence that the user is in each of the zones. In some conventional implementations of voice interface (e.g., Alexa) it is required that the voice assistant's voice is only issued from one location at a time, this forcing a single choice for the single location (e.g., one of the eight speaker locations, 1.1 and 1.3, in Fig. 1). However, based on simple imaginary role play, it is apparent that (in such conventional implementations) the likelihood of the selected location of the source of the assistant's voice (i.e., the location of a speaker included in or coupled to the assistant) being the focus point or natural return response for expressing attention may be low.

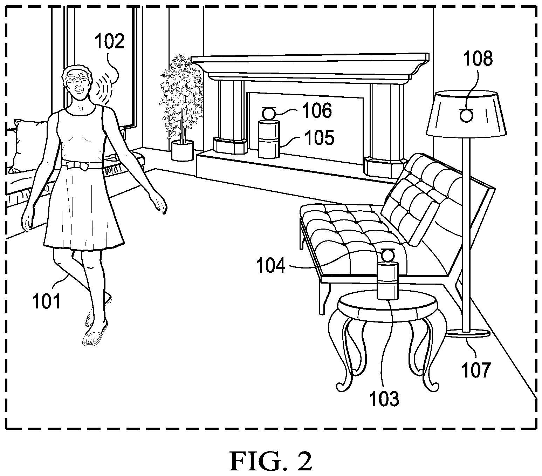

Fig. 2 is a diagram of another environment (109) which is an acoustic space including a user (101) who utters direct speech 102. The environment also includes a system including a set of smart audio devices (103 and 105), speakers for audio output, and microphones. The system may be configured in accordance with an embodiment of the invention. The speech uttered by user 101 (sometimes referred to herein as a talker) may be recognized by element(s) of the system as a wakeword.

More specifically, elements of the Fig. 2 system include:

> 102: direct local voice (uttered by user 101);
> 103: voice assistant device (coupled to a plurality of loudspeakers). Device 103 is positioned nearer to the user 101 than is device 105, and thus device 103 is sometimes referred to as a "near" device, and device 105 is referred to as a "distant" device;
> 104: plurality of microphones in (or coupled to) the near device 103;
> 105: voice assistant device (coupled to a plurality of loudspeakers);
> 106: plurality of microphones in (or coupled to) the distant device 105;
> 107: Household appliance (e.g. a lamp); and
> 108: Plurality of microphones in (or coupled to) household appliance 107. Each of microphones 107 is also coupled to at least one of devices 103 or 105.

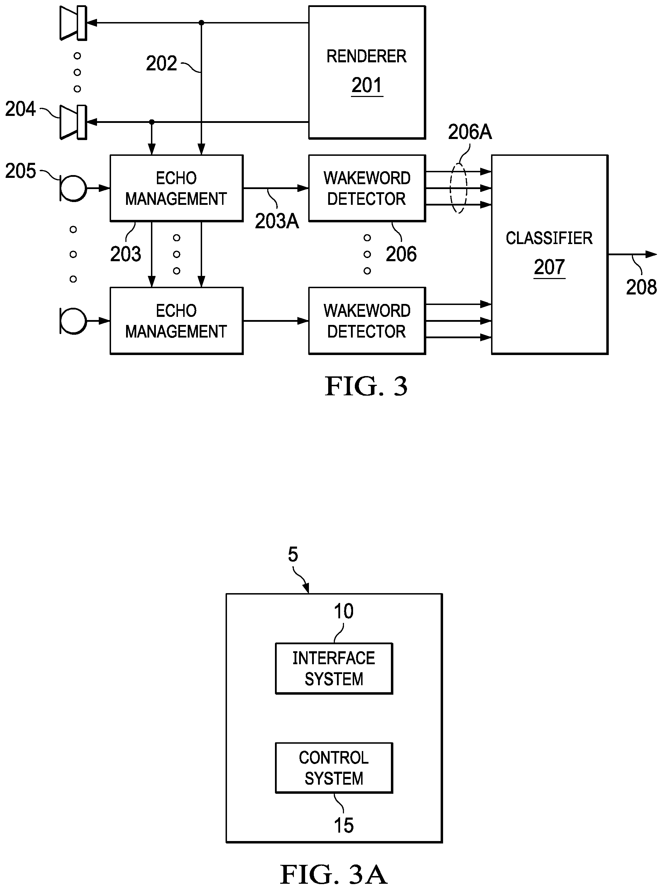

The Fig. 2 system may also include at least one speech analytics subsystem (e.g., the below-described system of Fig. 3 including classifier 207) configured to perform speech analytics on (e.g., including by classifying features derived from) microphone outputs of the system (e.g., to indicate a probability that the user is in each zone, of a number of zones of environment 109). For example, device 103 (or device 105) may include a speech analytics subsystem, or the speech analytics subsystem may be implemented apart from (but coupled to) devices 103 and 105.

Figure 3 is a block diagram of elements of a system which may be implemented in accordance with embodiment of the invention (e.g., by implementing wakeword detection, or other speech analytics processing, with training in accordance with an embodiment of the invention). The Fig. 3 system (which includes a zone classifier) is implemented in an environment having zones, and includes:

> 204: Plurality of loudspeakers distributed throughout a listening environment (e.g., the Fig. 2 environment);
> 201: Multichannel loudspeaker renderer, whose outputs serve as both loudspeaker driving signals (i.e., speaker feeds for driving speakers 204) and echo references;
> 202: Plurality of loudspeaker reference channels (i.e., the speaker feed signals output from renderer 202 which are provided to echo management subsystems 203);
> 203: Plurality of echo management subsystems. The reference inputs to subsystems 203 are all of (or a subset of) the speaker feeds output from renderer 202;
> 203A: Plurality of echo management outputs, each of which is output from one of subsystems 203, and each of which has attenuated echo (relative to the input to the relevant one of subsystems 203);

205: Plurality of microphones distributed throughout the listening environment (e.g., the Fig. 2 environment). The microphones may include both array microphones in multiple devices and spot microphones distributed throughout the listening environment. The outputs of microphones 205 are provided to the echo management subsystems 203 (i.e., each of echo management subsystems 203 captures the output of a different subset (e.g., one or more microphone(s)) of the microphones 205);

206: Plurality of wakeword detectors, each taking as input the audio output from one of subsystems 203 and outputting a plurality of features 206A. The features 206A output from each subsystem 203 may include (but are not limited to): wakeword confidence, wakeword duration, and measures of received level. Each of detectors 206 may implement a model which is trained in accordance with an embodiment of the invention;

206A: Plurality of features derived in (and output from) all the wakeword detectors 206;

207: Zone classifier, which takes (as inputs) the features 206A output from the wakeword detectors 206 for all the microphones 205 in the acoustic space. Classifier 207 may implement a model which is trained in accordance with an embodiment of the invention; and

208: The output of zone classifier 207 (e.g., indicative of a plurality of zone posterior probabilities).

We next describe example implementations of zone classifier 207 of Fig. 3.

Let $x_i(n)$ be the ith microphone signal, $i = \{1 \ldots N\}$, at discrete time $n$ (i.e., the microphone signals $x_i(n)$ are the outputs of the N microphones 205). Processing of the N signals $x_i(n)$ in echo management subsystem 203 generates 'clean' microphone signals $e_i(n)$, where $i = \{1 \ldots N\}$, each at a discrete time $n$. Clean signals $e_i(n)$, referred to as 203A in Fig. 3, are fed to wakeword detectors 206. Each wakeword detector 206 produces a vector of features $\mathbf{w}_i(j)$, referred to as 206A in Fig. 3, where $j = \{1 \ldots J\}$ is an index corresponding to the $j$th wakeword utterance. Classifier 207 takes as input an aggregate feature set $\mathbf{W}(j) = \left[\mathbf{w}_1^T(j) \ldots \mathbf{w}_N^T(j)\right]^T$.

A set of zone labels $C_k$, for $k = \{1 \ldots K\}$, is prescribed to correspond to zones (a number, $K$, of different zones) in the environment (e.g., a room). For example, the zones may include a couch zone, a kitchen zone, a reading chair zone, etc.

In some implementations, classifier 207 estimates (and outputs signals indicative of) posterior probabilities $p(C_k | \mathbf{W}(j))$ of the feature set $\mathbf{W}(j)$, for example by using a Bayesian classifier. Probabilities $p(C_k | \mathbf{W}(j))$ indicate a probability (for the "$j$"th utterance and the "$k$"th zone, for each of the zones $C_k$, and each of the utterances) that the user is in each of the zones $C_k$, and are an example of output 208 of classifier 207.

Typically, training data are gathered (e.g., for each zone) by having the user utter the wakeword in the vicinity of the intended zone, for example at the center and extreme edges of a couch. Utterances may be repeated several times. The user then moves to the next zone and continues until all zones have been covered.

An automated prompting system may be used to collect these training data. For example, the user may see the following prompts on a screen or hear them announced during the process:

- "Move to the couch."
- "Say the wakeword ten times while moving your head about."
- "Move to a position halfway between the couch and the reading chair and say the wakeword ten times."
- "Stand in the kitchen as if cooking and say the wakeword ten times."

Training the model implemented by classifier 207 (or another model which is trained in accordance with an embodiment of the invention) can either be labeled or unlabeled. In the labeled case, each training utterance is paired with a hard label

$$p\left(C_k | \mathbf{W}(j)\right) = \begin{cases} 1 & k = k' \\ 0 & \text{otherwise} \end{cases},$$

and a model is fitted to best fit the labeled training data. Without loss of generality, appropriate classification approaches might include:

- a Bayes' Classifier, for example with per-class distributions described by multivariate normal distributions, full-covariance Gaussian Mixture Models or diagonal-covariance Gaussian Mixture Models;
- Vector Quantization;
- Nearest Neighbor (k-means);
- a Neural Network having a softmax output layer with one output corresponding to each class;
- a Support Vector Machine (SVM); and/or
- Boosting techniques, such as Gradient Boosting Machines (GBMs)

In the unlabeled case, training of the model implemented by classifier 207 (or training of another model in accordance with an embodiment of the invention) includes automatically splitting data into $K$ clusters, where $K$ may also be unknown. The unlabeled automatic splitting can be performed, for example, by using a classical clustering technique, e.g., the k-means algorithm or Gaussian Mixture Modelling.

In order to improve robustness, regularization may be applied to the model training (which may be performed in accordance with an embodiment of the inventive method) and model parameters may be updated over time as new utterances are made.

We next describe further aspects of examples in which an embodiment of the inventive method is implemented to train a model (e.g., a model implemented by element 207 of the Fig. 3 system).

An example feature set (e.g., features 206A of Fig. 3, derived from outputs of microphones in zones of an environment) includes features indicative of the likelihood of wakeword confidence, mean received level over the estimated duration of the most confident wakeword, and maximum received level over the duration of the most confident wakeword. Features may be normalized relative to their maximum values for each wakeword utterance. Training data may be labeled and a full covariance Gaussian Mixture Model (GMM) trained to maximize expectation of the training labels. The estimated zone is the class that maximizes posterior probability.

The above description pertains to learning an acoustic zone model from a set of training data collected during a collection process (e.g., a prompted collection process). In that model, training time (operation in a configuration mode) and run time (operation in a regular mode) can be considered two distinct modes in which the microphones of the system may operate. An extension to this scheme is online learning, in which some or all of the acoustic zone model is learnt or adapted online (i.e., during operation in the regular mode).

An online learning mode may include steps of:

1. Whenever the user speaks the wakeword, predict which zone the user is in according to an a priori zone mapping model (e.g., learned offline during a setup phase or learned online during a previous learning epoch);
2. Obtain feedback, either implicit or explicit, as to whether this prediction was correct; and
3. Update the zone mapping model according to the feedback.

Explicit techniques for obtaining feedback include:

- Asking the user whether the prediction was correct using a voice user interface (UI) For example, sound indicative of the following may be provided to the user: "I think you are on the couch, please say 'right' or 'wrong'").
- Informing the user that incorrect predictions may be corrected at any time using the voice UI. (e.g., sound indicative of the following may be provided to the user: "I am now able to predict where you are when you speak to me. If I predict wrongly, just say something like 'Amanda, I'm not on the couch. I'm in the reading chair' ").
- Informing the user that correct predictions may be rewarded at any time using the voice UI. (e.g., sound indicative of the following may be provided to the user: "I am now able to predict where you are when you speak to me. If I predict correctly you can help to further improve my predictions by saying something like 'Amanda, that's right. I am on the couch.'").
- Including physical buttons or other UI elements that a user can operate in order to give feedback (e.g., a thumbs up and/or thumbs down button on a physical device or in a smartphone app).

The goal of predicting the acoustic zone (in which the user is located) may be to inform a microphone selection or adaptive beamforming scheme that attempts to pick up sound from the acoustic zone of the user more effectively, for example, in order to better recognize a command that follows the wakeword. In such scenarios, implicit techniques for obtaining feedback on the quality of zone prediction may include:

- Penalizing predictions that result in misrecognition of the command following the wakeword. A proxy that may indicate misrecognition may include the user cutting short the voice assistant's response to a command, for example, by uttering a counter-command like, for example, "Amanda, stop!";
- Penalizing predictions that result in low confidence that the speech recognizer has successfully recognized the command. Many automatic speech recognition systems have the capability to return a confidence level with their result that can be used for this purpose;
- Penalizing predictions that result in failure of a second-pass wakeword detector to retrospectively detect the wakeword with high confidence; and/or
- Reinforcing predictions that result in highly confident recognition of the wakeword and/or correct recognition of the user's command.

Techniques for the aposteriori updating of the zone mapping model after one or more wakewords have been spoken include:

- Maximum Aposteriori (MAP) adaptation of a Gaussian Mixture Model or nearest neighbor model; and/or
- Reinforcement Learning, for example of a neural network, for example by associating an appropriate "one-hot" (in the case of correct prediction) or "one-cold" (in the case of incorrect prediction) ground truth label with the softmax output and applying online back propagation to determine new network weights.

Figure 3A is a block diagram that shows examples of components of an apparatus (5) that may be configured to perform at least some of the methods disclosed herein. In some examples, apparatus 5 may be or may include a personal computer, a desktop computer, a graphics processing unit (GPU), or another local device that is configured to provide audio processing. In some examples, apparatus 5 may be or may include a server. According to some examples, apparatus 5 may be a client device that is configured for communication with a server, via a network interface. The components of apparatus 5 may be implemented via hardware, via software stored on non-transitory media, via firmware and/or by combinations thereof. The types and numbers of components shown in Figure 3A, as well as other figures disclosed herein, are merely shown by way of example. Alternative implementations may include more, fewer and/or different components.

Apparatus 5 of Fig. 3A includes an interface system 10 and a control system 15. Apparatus 5 may be referred to as a system, and elements 10 and 15 thereof may be referred to as subsystems of such system. Interface system 10 may include one or more network interfaces, one or more interfaces between control system 15 and a memory system and/or one or more external device interfaces (e.g., one or more universal serial bus (USB) interfaces). In some implementations, interface system 10 may include a user interface system. The user interface system may be configured for receiving input from a user. In some implementations, user interface system may be configured for providing feedback to a user. For example, the user interface system may include one or more displays with corresponding touch and/or gesture detection systems. In some examples, the user interface system may include one or more microphones and/or speakers. According to some examples, the user interface system may include apparatus for providing haptic feedback, such as a motor, a vibrator, etc. Control system 15 may, for example, include a general purpose single- or multi-chip processor, a digital signal processor (DSP), a graphics processing unit (GPU), an application specific integrated circuit (ASIC), a field programmable gate array (FPGA) or other programmable logic device, discrete gate or transistor logic, and/or discrete hardware components. Control system 15 may also include one or more devices implementing non-transitory memory.

In some examples, apparatus 5 may be implemented in a single device. However, in some implementations, the apparatus 5 may be implemented in more than one device. In some such implementations, functionality of control system 15 may be included in more than one device. In some examples, apparatus 5 may be a component of another device.

In some embodiments, apparatus 5 is or implements a system for training an acoustic model, wherein the training includes a data preparation phase and a training loop which follows the data preparation phase, and wherein the training loop includes at least one epoch. In some such embodiments,

interface system 10 is or implements a data preparation subsystem, which is coupled and configured to implement the data preparation phase, including by receiving or generating training data, wherein the training data are or include at least one example of audio data, and

control system 15 is or implements a training subsystem, coupled to the data preparation subsystem and configured to augment the training data during the training loop, thereby generating augmented training data, and to use at least some (e.g., a different subset) of the augmented training data to train the model during each epoch of the training loop (e.g., different subsets of the augmented training data are generated during the training loop for use during different epochs of the training loop, with each said subset generated by differently augmenting at least some of the training data).

According to some examples, elements 201, 203, 206, and 207 of the Fig. 3 system, implemented in accordance with an embodiment of the invention, may be implemented via one or more systems (e.g., control system 15 of Fig. 3A). Similarly, elements of other embodiments of the invention (e.g., elements configured to implement the method described herein with reference to Fig. 1B) may be implemented via one or more systems (e.g., control system 15 of Fig. 3A).

With reference to Fig. 1A, we next describe an example of a conventional multi-style training method. Fig. 1A is a flowchart (100A) of a conventional multi-style training method for training acoustic model 114A. The method may be implemented by a programmed processor or other system (e.g., control system 15 of Fig. 3A), and steps (or phases) of the method may be implemented by one or more subsystems of the system. Herein, such a subsystem is sometimes referred to as a "unit" and the step (or phase) implemented thereby is sometimes referred to as a function.

The Fig. 1A method includes a data preparation phase 130A, and a training loop (training phase) 131A which is performed after the data preparation phase 130A. **In** the method, augmentation function (unit) 103A augments audio training data (110) during data preparation phase 130A.

Elements of Fig. 1A include the following:

- 101A: an indication of separation between data preparation phase 130A and training loop (training phase) 131A. Phases 130A and 131A typically may be considered to be two distinct phases of the full training procedure. Each pass through training loop 131A may be referred to as an epoch;
- 102A: start of program flow (i.e., start of execution of the program which performs the Fig. 1A method);
- 103A: Augmentation function/unit. This function (or unit) takes the training data (training set) 110 and applies augmentation (e.g., addition of reverberation, addition of stationary noise, addition of non-stationary noise, and/or addition of simulated echo residuals) thereto, thus generating augmented training data (augmented training set) 112A;
- 104A: Feature extraction function/unit. This function (or unit) takes as input the augmented training data 112A (e.g., time domain PCM audio data) and extracts therefrom features 113A (e.g., Mel Frequency Cepstral Coefficients (MFCC), "logmelspec" (logarithm of powers of bands spaced to occupy equal or substantially equal parts of the Mel spectrum) coefficients, coefficients which are indicative of powers of bands spaced to occupy at least roughly equal parts of the log spectrum, and/or Perceptual Linear Predictor (PLP) coefficients) for training the model 114A;
- 105A: Prediction phase (or unit) of training phase 131A. In phase 105A, the training features (113A) are run through the model (114A). For example, if training phase 131A is or implements the Expectation Maximisation (EM) algorithm, then phase 105A (sometimes referred to as function 105A) may be what is known as the "E-step." When model 114A is an HMM-GMM acoustic model, then an applicable variant of the EM algorithm is the Baum Welch algorithm. On the other hand, if the model 114A is a neural network model, then prediction function 105A corresponds to running the network forward;
- 106A: Update phase of training phase 131A. In this phase of training the predicted output(s) from phase 105A are compared against ground truth labels (e.g., 121C) using some kind of loss criterion, and the determined loss is used to update the model 114A. If training phase 131A is the EM algorithm, then phase 106A may be known as the "M-step". On the other hand, if training procedure 131A is a neural network training procedure then phase 106A may correspond to computing the gradient of the CTC (Connectionist Temporal Classification) loss function and back propagating;
- 107A: Application of convergence (stopping) criterion to determine whether to stop the training phase 131A. Typically, training phase 131A will need to run for multiple iterations until it is stopped upon determination that the convergence criterion is met. Examples of stopping criteria include (but are not limited to):

    o Running for a fixed number of epochs/passes (through the loop of phase 131A); and/or
    o Waiting until the training loss changes by less than a threshold from epoch to epoch;

- 108A: Stop. Once control reaches this point in the method (which may be implemented as a computer program running on a processor), training of model 114A is complete;
- 110: Training set: training data (e.g., a plurality of example audio utterances) for training the acoustic model 114A. Each audio utterance may include or contain PCM speech data 120A and some kind of label or transcription 121A (e.g., one such label may be "cat");
- 112A: Augmented training set. Augmented training set 112A is an augmented version of training set 110 (e.g., it may include a plurality of augmented versions of the audio utterances from training set 110). In an example, augmented PCM utterance 122A (of set 112A) is an augmented version of PCM speech data 120A, and set 112A includes (i.e., retains) the label "cat" (121B) which is copied from the input label 121A. However, as shown in Fig. 1A, augmentation unit 103A has generated augmented PCM data 122A so as to include the following extra features:

    ○ 123A, 123B: Instances of non-stationary noise; and
    ○ 124A: Reverberation;

- 113A: Augmented features (determined by function 104A) corresponding to the conventional augmented training set 112A. In the example, feature set 113A include a Mel-spectrogram (127A) corresponding to the PCM utterance 122A. Augmented feature set 113A contains the following augmentations corresponding to features 123A, 123B and 124A:

    ○ 125A-125D: Instances of non-stationary noise (time-bound and frequency/- bound); and
    ○ 126A: Reverberation;

- 120A: PCM speech data for one example utterance in the training set (110);
- 121A: label (e.g., transcription) for one example utterance (corresponding to PCM speech data 120A) in the training set (110);
- 127A: Features (e.g., spectrogram or logmelspec features) for one utterance in the augmented feature set 113A;

- 130A: Data preparation phase. This occurs once and may therefore not be heavily optimised. In a typical deep learning training procedure the computations for this phase will occur on the CPU; and
- 131A: Main training phase (loop). Since the phases (105A, 106A, 107A) in this loop run over main passes/epochs these operations are typically heavily optimised and run on a plurality of GPUs.

Next, with reference to Fig. 1B, we describe an example of a multi-style training method according to an embodiment of the present invention. The method may be implemented by a programmed processor or other system (e.g., control system 15 of Fig. 3A), and steps (or phases) of the method may be implemented by one or more subsystems of the system. Herein, such a subsystem is sometimes referred to as a "unit" and the step (or phase) implemented thereby is sometimes referred to as a function.

Fig. 1B is a flowchart (100B) of the multi-style training method for training acoustic model 114B. The Fig. 1B method includes data preparation phase 130B, and training loop (training phase) 131B which is performed after the data preparation phase 130B. In the method of Fig. 1B, augmentation function 103B augments audio training data (features 111B generated from training data 110) during training loop 131B to generate augmented features 113B.

In contrast to the conventional approach of Fig. 1A, the augmentation (by function/unit 103B of Fig. 1B) is performed in the feature domain and during the training loop (phase 131B) rather than directly on input audio training data (110) in the data preparation phase (phase 130A of Fig. 1A). Elements of Fig. 1B include the following:

- 102B: Start of program flow (i.e., start of execution of the program which performs the Fig. 1B method);
- 101B: an indication of separation between data preparation phase 130B and training loop (training phase) 131B. Phases 130B and 131B typically may be considered to be two distinct phases of the full training procedure. During training loop 131B, training of model 114B typically occurs in a sequence of training epochs, and each such training epoch is sometimes referred to herein as a "pass" or "minibatch" of or through the training loop;
- 110: Training data set. Training data 110 of Fig. 1B may be same as training data 110 of the conventional method of Fig. 1A;
- 111B: Unaugmented training set features (generated by feature extraction function 104A, which may be same as function 104A of the Fig. 1A method);
- 103B: data augmentation function (or unit). This function (unit) takes the features 111B (determined in data preparation phase 130B) and applies augmentation thereto, thus generating augmented features 113B. Examples of the augmentation will be described herein, and include (but are not limited to) addition of reverberation, addition of stationary noise, addition of non-stationary noise, and/or addition of simulated echo residuals. In contrast to conventional data augmentation unit 103A (of Fig. 1A), unit 103B operates:

  o in the feature domain. For this reason, in typical implementations it can be fast and efficiently implemented on a GPU as part of a deep learning training procedure; and
  o inside training loop 131B (i.e., during each pass through, or epoch of, training loop 131B). Thus, different augmentation conditions (e.g., distinct room/reverberation models, distinct noise levels, distinct noise spectra, distinct patterns of non-stationary noise or music residuals) can be chosen for each training example in the training set 110 during each training epoch;

- 104A: Feature extraction function/unit. This function (unit) takes input training data 110 (e.g., input time domain PCM audio data) and extracts therefrom features 111B for augmentation in function (unit) 103B and use for training the model 114B. Examples of features include 111B (but are not limited) to Mel Frequency Cepstral Coefficients (MFCC), "logmelspec" (logarithms of powers of bands spaced to occupy equal or substantially parts of the Mel spectrum) coefficients, coefficients which are indicative of powers of bands spaced to occupy at least roughly equal parts of the log spectrum, and Perceptual Linear Predictor (PLP) coefficients;
- 105B: Prediction phase of training loop 131B, in which augmented training data 113B are run through the model (114B) being trained. Phase 105B may be performed in the same way as phase 105A (of Fig. 1A) but is typically performed using augmented training data 113B (augmented features generated by unit 103B) which may be updated during each epoch of the training loop, rather than augmented training data generated in a data preparation phase prior to performance of the training loop. In some implementations, phase 105B may use (e.g., in one or more epochs of the training loop) unaugmented training data (features 111B) rather than augmented training data 113B. Thus, data flow path 115B (or a path similar or analogous to example data flow path 115B) may be utilized to provide augmented training data 113B for use in phase 105B;
- 106B: Update phase (unit) of training loop 131B. This may be the same as phase (unit) 106A (of Fig. 1A) but it typically operates on augmented training data 113B (generated during training phase 131B) rather than on augmented training data generated during a data preparation phase (as in Fig. 1A) performed prior to a training phase. In some implementations, due to the novel design of the training procedure of Fig. 1B, it is now convenient to activate optional data flow path 115B to allow phase 106B to access and use unaugmented training data 111B (e.g., ground truth label 121E) rather than only augmented training data 113B;

- 107B: Application of convergence (stopping) criterion to determine whether to stop the training phase (loop) 131B. Training loop 131B typically needs to run for multiple iterations (i.e., passes or epochs of loop 131B) until it is stopped upon determination that the convergence criterion is met. Step 107B may be identical to step 107A of Fig. 1A;
- 108B: Stop. Once control reaches this point in the method (which may be implemented as a computer program running on a processor), training of model 114B is complete;
- 113B: Augmented training set features. In contrast to conventionally generated augmented features 113A of Fig. 1A, augmented features 113B are temporary intermediate data that are only required during training in one epoch of (e.g., minibatch or pass, of or in) loop 131B. Thus, features 113B can be efficiently hosted in GPU memory;
- 114B: Model being trained. Model 114B may be the same as or similar to model 114A of Fig. 1A, but is trained from data augmented (in the feature domain) in the training loop by augmentation unit 103B;
- 115B: Optional data flow path allowing update phase/unit 106B (and/or prediction phase/unit 105B) to access unaugmented features 111B. This is convenient and memory-efficient in the Fig. 1B embodiment of the invention but not in the conventional method of Fig. 1A, and allows (in the Fig. 1B embodiment) at least some of the following types of models to be efficiently trained:

  o models implemented by noise suppression systems wherein the augmented data is the input to a network and the unaugmented data is the desired output of the network. Such a network would typically be trained with a mean-square error (MSE) loss criterion.
  ∘ models implemented by noise suppression systems wherein the augmented data is the input to a network and a gain to achieve the unaugmented data is the desired output of the network. Such a network would typically be trained with a mean-square error (MSE) loss criterion.
  ∘ models implemented by noise suppression systems wherein the augmented data is the input to a network and a probability that each band in each frame contains desirable speech (e.g., as opposed to undesirable noise) is the desired output of the network. Some such systems may distinguish between multiple kinds of undesirable artefacts (e.g., stationary noise, non-stationary noise, reverberation). Based on this output a suppression gain can be determined. Such a network would typically be trained with a cross-entropy loss criterion.
  ∘ models implemented by speech analytics systems (e.g., wakeword detectors, automatic speech recognisers) wherein an estimate of the signal to noise ratio (SNR), signal to echo ratio (SER) and/or direct to reverb ratio (DRR) is used to weight inputs to a network, or used as extra inputs to a network in order to obtain better results in the presence of noise, echo, and/or reverberation. At runtime, said SNR, SER and/or DRR might be estimated by some signal processing component such as a noise estimator, echo predictor, echo canceller, echo suppressor or reverberation modeller. Here, at training time, path 115B allows for ground truth SNR, SER and/or DRR to be derived by subtracting the unaugmented features 111B from the augmented features 113B;

- 120A-121A: the same as the corresponding (identically numbered) elements of the conventional example of Fig. 1A;
- 121E: Label for one of unaugmented training features 111B (copied from training set 110, by feature extraction unit 104A);
- 121F: Label for one of augmented training features 113B (copied from training set 110 by augmentation unit 103B);
- 125A-125D: Examples of feature elements of features 113B corresponding to non-stationary noise added by augmentation unit 103B;
- 126B: Examples of feature elements of features 113B corresponding to reverberation added by augmentation unit 103B;
- 128B: Features (e.g., spectrogram or logmelspec features) for one utterance in the unaugmented training set features 111B;
- 130B: Data preparation phase of training. It should be appreciated that in the Fig. 1B embodiment there is no need to re-run the data preparation phase 130B if the augmentation parameters for augmentation unit 103B change; and
- 131B: main phase of training in the Fig. 1B embodiment. In the Fig. 1B embodiment, data augmentation occurs during the main training loop 131B.

Examples of types of augmentations that may be applied (e.g., by augmentation function 103B of Fig. 1B on training data features) in accordance with embodiments of the invention include (but are not limited to) the following:

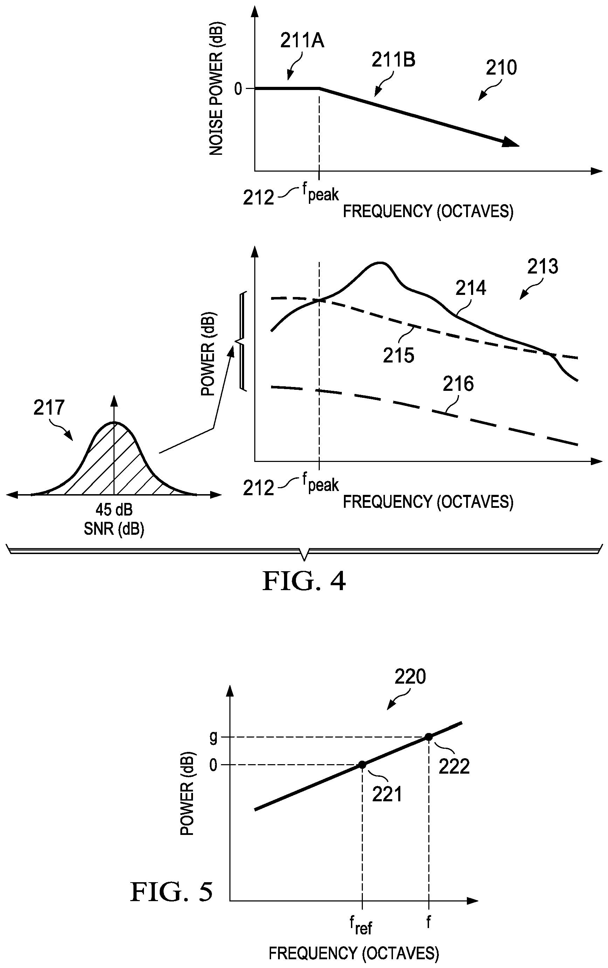

- **Fixed spectrum stationary noise:** For example, for each utterance in a training set (e.g., each utterance of or indicated by training set 110, and thus each utterance of or indicated by feature set 111B), select a random SNR from a distribution (e.g., normal distribution with mean 45 dB, and standard deviation 10 dB) of SNR values, and apply stationary noise with a fixed spectrum (e.g., white noise, pink noise, or Hoth noise) at a selected level (determined by the selected SNR value) below the incoming speech signal. When the input features (to be augmented by application of the noise) are band powers in dB, adding the noise corresponds to taking the bandwise maximum of noise power and signal power. An example of fixed spectrum stationary noise augmentation will be described with reference to Fig. 4;

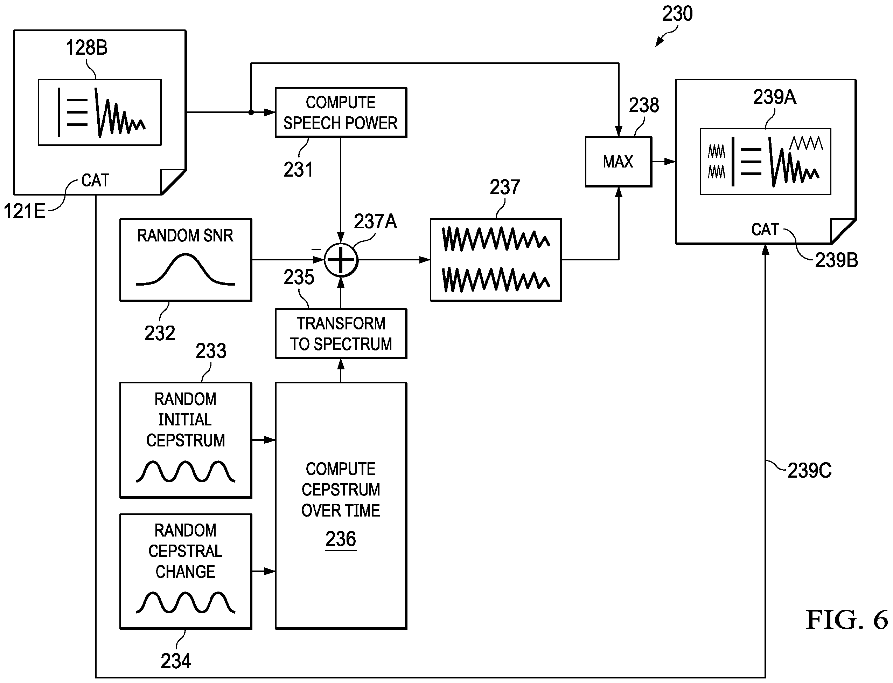

- **Variable spectrum semi-stationary noise:** For example, select a random SNR (as for the fixed spectrum stationary noise example), and also select a random stationary noise spectrum from a distribution (for example, a distribution of linear slope values in dB/octave, or a distribution over DCT values of the log mel spectrum (cepstral)). Then, apply the noise at the chosen level (determined by the selected SNR value) with the selected shape. In some embodiments, the shape of the noise is varied slowly over time by, for example, choosing a rate of change for each cepstral value per second and using that to modulate the shape of the noise being applied (e.g., during one epoch, or in between performance of successive epochs). An example of variable spectrum semi-stationary noise augmentation will be described with reference to Fig. 6;

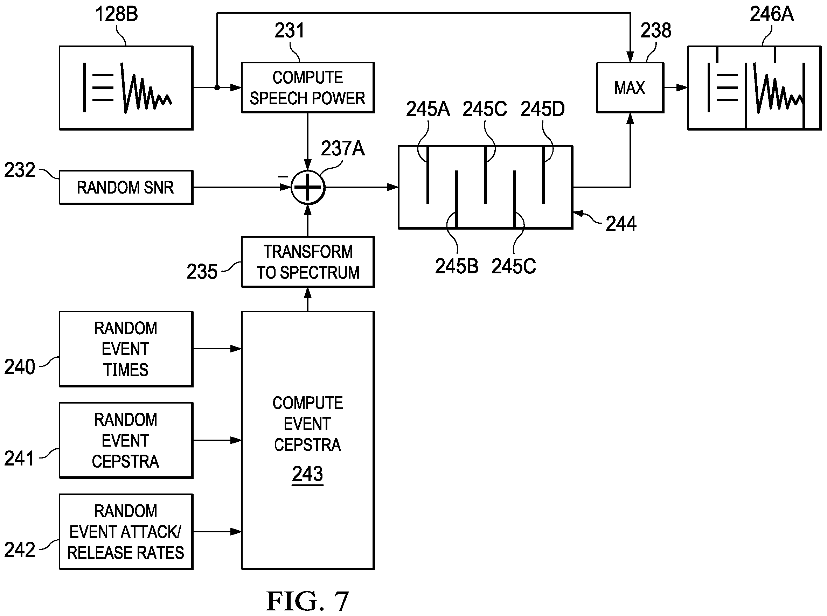

- **Non-stationary noise:** Add noise that is localized to random locations in the spectrogram (of each training data feature to be augmented) in time and/or in frequency. For example, for each training utterance, draw ten rectangles, each rectangle having a random start time and end time and a random start frequency band and end frequency band and a random SNR. Within each rectangle, add noise at the relevant SNR. An example of non-stationary noise augmentation will be described with reference to Figure 7;

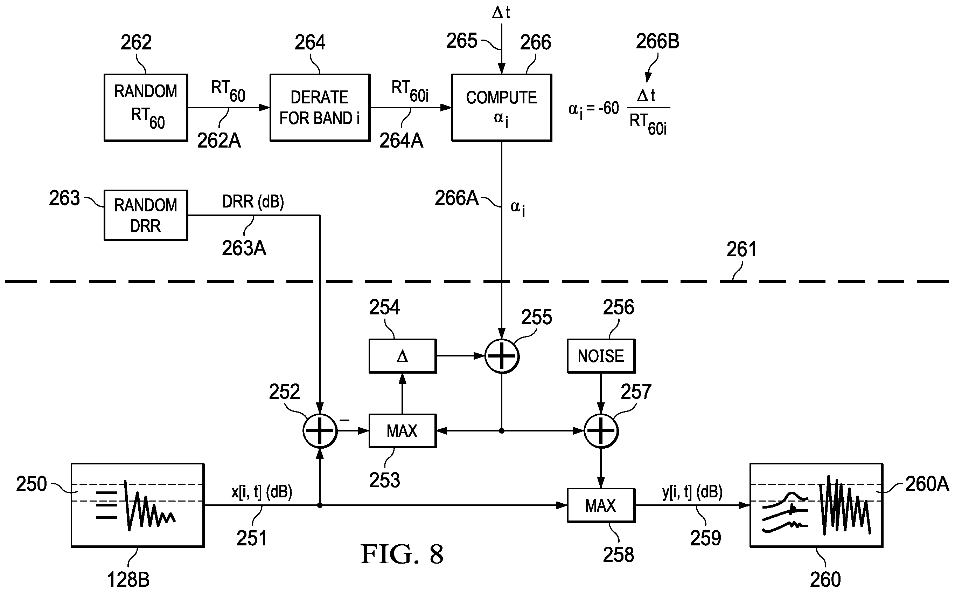

- **Reverberation:** Apply a reverberation model (e.g., with a random RT60, mean free path and distance from source to microphone) to the training data (features) to be augmented, to generate augmented training data. Typically, different reverb is applied to the augmented training data to be used during each epoch of the training loop (e.g., loop 131B of Fig. 1B). The term "RT60" denotes the time required for the pressure level of sound (emitted from a source) to decrease by 60 dB, after the sound source is abruptly switched off. The reverberation model applied to generate the augmented training data (features) may be of a type described in above-referenced US Patent Application Publication No. 2019/0362711. An example of augmentation with reverberation (which applies a simplified reverberation model) will be described below with reference to Figure 8;

- **Simulated echo residuals:** To simulate leakage of music through an echo canceller or echo suppressor (i.e., where the model to be trained is a model, e.g., a speech recognizer, which is to follow an echo cancellation or echo suppression model and operate with echo present), an example of the augmentation adds music-like noise (or other simulated echo residuals) to the features to be augmented. So-augmented training data may be useful to train echo cancellation or echo suppression models. Some devices (e.g., some smart speakers and some other smart audio devices) must routinely recognize speech incident at their microphones while music is playing from their speakers, and typically use an echo canceller or echo suppressor (which may be trained in accordance with some embodiments of the present invention) to partially remove echo. A well-known limitation of echo cancellation and echo suppression algorithms is their degraded performance in the presence of "double talk," referring to speech and other audible events picked up by microphones at the same time as echo signals. For example, the microphones on a smart device will frequently pick up both echo from the device's speakers, as well as speech utterances from nearby users even when music or other audio is playing. Under such "double-talk" conditions, echo cancellation or suppression using an adaptive filtering process may suffer mis-convergence and an increased amount of echo may "leak." In some instances, it may be desirable to simulate such behavior during different epochs of the training loop. For example, in some embodiments, the magnitude of simulated echo residuals added (during augmentation of training data) is based at least in part on utterance energy (indicated by the unaugmented training data). Thus, the augmentation is performed in a manner determined in part from the training data. Some embodiments gradually increase the magnitude of the added simulated echo residuals for the duration that the utterance is present in the unaugmented training vector. Examples of simulated echo residuals augmentation will be described below with reference to Julia code listings ("Listing 1" and "Listing 1B");

- **Microphone equalization:** Speech recognition systems often need to operate without complete knowledge of the equalization characteristics of their microphone hardware. Therefore it can be beneficial to apply a range of microphone equalization characteristics to the training data during different epochs of a training loop. For example, choose (during each epoch of a training loop) a random microphone tilt in dB/octave (e.g., from a normal distribution with mean of 0dB/octave, standard deviation of 1dB/octave) and apply to training data (during the relevant epoch) a filter which has a corresponding linear magnitude response. When the feature domain is log (e.g., dB) band power, this may correspond to adding (during each epoch) an offset to each band proportional to distance from some reference band in octaves. An example of microphone equalization augmentation will be described with reference to Fig. 5;

- **Microphone cutoff:** Another microphone frequency response characteristic which is not necessarily known ahead of time is the low frequency cutoff. For example, one microphone may pick up frequency components of a signal down to 200 Hz, while another microphone may pick up frequency components of a signal (e.g., speech) down to 50 Hz. Therefore, augmenting the training data features by applying a random low frequency cutoff (highpass) filter may improve performance across a range of microphones; and/or

- **Level:** Another microphone parameter which may vary from microphone to microphone and from acoustic situation to acoustic situation is the level or bulk gain. For example, some microphones may be more sensitive than other microphones and some talkers may sit closer to a microphone than other talkers. Further some talkers may talk at higher volume than other talkers. Speech recognition systems must therefore deal with speech at a range of input levels. It may therefore be beneficial to vary the level of the training data features during training. When the features are band power in dB, this can be accomplished by drawing a random level offset from a distribution (e.g., uniform distribution over [-20, +20] dB) and adding that offset to all band powers.

An embodiment of the invention, which includes fixed spectrum stationary noise augmentation, will be described with reference to Fig. 4.

In the Fig. 4 example, training data (e.g., features 111B of Fig. 1B) are augmented (e.g., by function/unit 103B of Fig. 1b) by addition of fixed spectrum stationary noise addition thereto in accordance with the embodiment. Elements of Fig. 4 include the following:

- 210: example noise spectrum (a plot of noise power in dB versus frequency);
- 211A: flat portion of spectrum 210, which is the portion of spectrum 210 below reference frequency $f_{peak}$ (labeled as frequency 212 in Fig. 4). An example value of $f_{peak}$ is 200Hz;
- 211B: portion of example spectrum 210 above frequency $f_{peak}$. Portion 211B of spectrum 210 rolls off at a constant slope in dB/octave. According to experiments by Hoth (see Hoth, Daniel, The Journal of the Acoustical Society of America 12, 499 (1941); https://doi.org/10.1121/1.191629), a typical mean value to represent such roll off of noise in real rooms is 5 dB / octave;
- 212: Reference frequency ($f_{peak}$) below which the noise spectrum is modelled as flat;
- 213: plots of spectra 214, 215, and 216 (in units of power in dB versus frequency). Spectrum 114 is an example of mean speech power spectrum (e.g., of the training data to be augmented), and spectrum 215 is an example of an equivalent noise spectrum 215. Spectrum 216 is an example of the noise to be added to the training data (e.g., to be added by function/unit 103B of Fig. 1B to a training vector in the feature domain);
- 214: Example mean speech spectrum for one training utterance (a training vector);
- 215: Equivalent noise spectrum. This is formed by shifting the noise spectrum 210 by the equivalent noise power so that the mean power over all frequency bands of the equivalent noise spectrum 215 is equal to the mean power over all bands of the mean speech spectrum 214. The equivalent noise power can be computed using the following formula:

  ○

$$ENP = 10 \, log_{10} \left( \frac{1}{N} \sum_{i=1}^{N} 10^{\frac{x_i - n_i}{10}} \right)$$

  where

  - $x_i$ is the mean speech spectrum in band i in decibels (dB),
  - $n_i$ is the prototype noise spectrum in band i in decibels (dB), and
  - There are N bands;

- 216: Added noise spectrum. This is the spectrum of the noise to be added to the training vector (in the feature domain). It is formed by shifting the equivalent noise spectrum 215 down by a Signal to Noise Ratio, which is drawn from the SNR distribution 217. Once created, the noise spectrum 216 is added to all frames of the training vector in the feature domain (e.g., the adding is performed approximately, by taking (i.e., including in the augmented training vector) the maximum of the signal band power 214 and the noise spectrum 216 in each time-frequency tile; and
- 217: a Signal to Noise Ratio (SNR) distribution. An SNR is drawn (e.g., by function/unit 103B of Fig. 1B) from the distribution 217, in each epoch/pass of the training loop (e.g., loop 131B of Fig. 1B), for use in determining the noise to be applied (e.g., by function/unit 103B) in the epoch/pass to augment each training vector. In the example shown in Fig. 4, SNR distribution 217 is a normal distribution with a mean of 45 dB and a standard deviation of 10 dB.

Another embodiment of the invention, which includes microphone equalization augmentation, will be described with reference to Fig. 5. In the Fig. 5 example, training data (e.g., features 111B of Fig. 1B) are augmented (e.g., by function/unit 103B of Fig. 1B) by applying thereto, during each epoch of a training loop, a filter (e.g., a different filter for each different epoch) having a randomly chosen linear magnitude response. The characteristics of the filter (for each epoch) are determined from a randomly chosen microphone tilt (e.g., a tilt, in dB/octave, chosen from a normal distribution of microphone tilts). Elements of Fig. 5 include the following:

- 220: Example microphone equalization spectrum. Spectrum (curve) 220 is a plot of gain (in dB) versus frequency (in octaves) to be applied to be added to all frames of one training vector in one epoch/pass of a training loop. In the example, curve 220 is linear in dB / octaves;
- 221: Reference point (of curve 220), in the band corresponding to (i.e., including) reference frequency $f_{ref}$ (e.g., $f_{ref}$ = 1 kHz). In Fig. 5, the power of equalization spectrum 220 at reference frequency $f_{ref}$ is 0dB; and
- 222: A point of curve 220, in a band having an arbitrary frequency, f. At point 222, the equalization curve 220 has gain of "g" dB, where $g = T \log_2(f - f_{ref})$ for a randomly chosen tilt T in dB / octave. For example, the value of T (for each epoch/pass) may be drawn randomly.

With reference to Fig. 6, we next describe another embodiment of augmentation applied to training data (e.g., by unit 103B of Fig. 1B) in accordance with the invention, in which the augmentation includes variable spectrum semi-stationary noise addition. In this embodiment, for each epoch (pass) of the training loop (or once, for use for plurality of successive epochs of the training loop), a Signal to Noise Ratio (SNR) is drawn from an SNR distribution (as in an embodiment employing fixed spectrum stationary noise addition). Also, for each epoch of the training loop (or once, for use for plurality of successive epochs of the training loop), a random stationary noise spectrum is selected from a distribution of noise spectrum shapes (for example, a distribution of linear slope values in dB/octave, or a distribution over DCT values of the log mel spectrum (cepstral)). For each epoch, an augmentation (i.e., noise, whose power as a function of frequency is determined from the chosen SNR and the chosen shape) is applied to each set of training data (e.g., each training vector). In some implementations, the shape of the noise is varied slowly over time (e.g., during one epoch) by, for example, choosing a rate of change for each cepstral value per second and using that to modulate the noise shape.

Elements of Fig. 6 include the following:

- 128B: a set of input (i.e., unaugmented) training data features (e.g., "logmelspec" band powers in dB for a number of Mel-spaced bands over time). Features 128B (which may be referred to as a training vector) may be or include one or more features of one utterance in (i.e., indicated by) unaugmented training set 111B of Fig. 1B, and are assumed to be speech data in the following description;
- 121E: Metadata (e.g., transcription of a word spoken) associated with training vector 128B;
- 231: Speech power computation. This step of computing speech power of training vector 128B can be performed at preparation time (e.g., during preparation phase 130B of Fig. 1B) before training commences;
- 232: a randomly chosen Signal to Noise Ratio (e.g., in dB), which is randomly chosen (e.g., during each epoch) from a distribution (e.g., a normal distribution with mean 20dB and standard deviation (between training vectors) of 30 dB);
- 233: a randomly chosen initial spectrum or cepstrum (which is randomly chosen during each epoch, or randomly chosen once before the first epoch) for the noise to be added to the training vector;
- 234: Choose a random rate of change (e.g., dB per second) of the randomly chosen initial spectrum or cepstrum. The change which occurs at this rate may be over different frames of a training vector (in one epoch), or over different epochs;
- 236: Compute the effective noise spectrum or cepstrum of the noise to be applied to each frame of the training vector according to the parameters chosen by steps 233 and 234. Noise having the same effective noise spectrum or cepstrum may be applied to all frames of one training vector in one epoch of training, or noise having different effective noise spectra (or cepstrums) may be applied to different frames of a training vector in one epoch. To generate the noise spectrum or cepstrum, zero or more (e.g., one or more) random stationary narrowband tones may be included therein (or added thereto);
- 235: an optional step of converting an effective noise cepstrum to a spectral representation. If using a cepstral representation for 233, 234, and 236, step 235 converts the effective noise cepstrum 236 to a spectral representation;
- 237A: Generate the noise spectrum to be applied to all (or some) frames of one training vector in one epoch of training, by attenuating the noise spectrum generated during step 235 (or step 236, if step 235 is omitted) using SNR value 240. In step 237A, the noise spectrum is attenuated (e.g., amplified) so that it sits below the speech power determined in step 231 by the chosen SNR value 232 (or above the speech power determined in step 231 if the chosen SNR value 232 is negative);
- 237: the complete semi-stationary noise spectrum generated in step 237A;
- 238: Combine the clean (unaugmented) input features 128B with the semi-stationary noise spectrum 237. If working in a logarithmic (e.g., dB) domain addition of the noise band powers to the corresponding speech powers can be approximated by taking (i.e., including in augmented training vector 239A) the element-wise maximum of each speech power and the corresponding noise band power;
- 239A: The augmented training vector (generated during step 238) to be presented to the model (e.g., a DNN model) for training. For example, augmented training vector 239A may be an example of augmented training data 113B generated by function 103B (of Fig. 1B) for use in one epoch of training loop 131B of Fig. 1B;
- 239B: Metadata (e.g., transcription of the word spoken) associated with training vector 239A (which may be required for training); and

- 239C: a data flow path indicating that metadata (e.g., transcription) 239B can be copied directly from input (metadata 121E of training data 128B) to output (metadata 239B of augmented training data 239A) since the metadata are not affected by the augmentation process.

With reference to Fig. 7, we next describe another embodiment of augmentation applied to training data (e.g., by unit 103B of Fig. 1B) in accordance with the invention, in which the augmentation includes non-stationary noise addition. Elements of Fig. 7 include the following:

- 128B: a set of input (i.e., unaugmented) training data features (e.g., "logmelspec" band powers in dB for a number of Mel-spaced bands over time). Features 128B (which may be referred to as a training vector) may be or include one or more features of one utterance in (i.e., indicated by) unaugmented training set 111B of Fig. 1B, and are assumed to be speech data in the following description;
- 231: Speech power computation. This step of computing speech power of training vector 128B can be performed at preparation time (e.g., during preparation phase 130B of Fig. 1B) before training commences;
- 232: a randomly chosen Signal to Noise Ratio (e.g., in dB), which is randomly chosen (e.g., during each epoch) from a distribution (e.g., a normal distribution with mean 20dB and standard deviation (between training vectors) of 30 dB);
- 240: randomly chosen times for inserting events. The step of choosing the times (at which the events are to be inserted) can be performed by drawing a random number of frames (e.g., a time corresponding to a number of frames of training vector 128B, for example, in the range 0-300 ms) from a uniform distribution and then drawing random inter-event periods from a similar uniform distribution until the end of the training vector is reached;
- 241: a randomly chosen cepstrum or spectrum for each of the events (e.g., chosen by drawing from a normal distribution);
- 242: a randomly chosen attack rate and release rate (e.g., chosen by drawing from a normal distribution) for each of the events;
- 243: a step of computing, from the chosen parameters 240, 241, and 242, the resulting event cepstrum or spectrum for each frame of the training vector;
- 235: an optional step of converting each event cepstrum to a spectral representation. If performing step 243 in the cepstral domain using a cepstral representation for 241, step 235 converts each cepstrum computed in step 243 to a spectral representation;
- 237A: Generate a sequence of noise spectra to be applied to frames of one training vector in one epoch of training, by attenuating (or amplifying) each of the noise spectra generated during step 235 (or step 243, if step 235 is omitted) using SNR value 232. The noise spectra to be attenuated (or amplified) in step 237A may be considered to be non-stationary noise events. **In** step 237A, each noise spectrum is attenuated (amplified) so that it sits below the speech power determined in step 231 by the chosen SNR value 232 (or above the speech power determined in step 231 if the chosen SNR value 232 is negative);
- 244: a complete non-stationary noise spectrum, which is a sequence of the noise spectra generated in step 237A. Non-stationary noise spectrum 244 may be considered to be a sequence of individual noise spectra, each corresponding to a different one of a sequence of discrete synthesized noise events (including synthesized noise events 245A, 245B, 245C, and 245D indicated in Fig. 7), where individual ones of the spectra in the sequence are to be applied to individual frames of training vector 128B;
- 238: Combine the clean (unaugmented) input features 128B with the non-stationary noise spectrum 244. If working in a logarithmic (e.g., dB) domain, addition of the noise band powers to the corresponding speech powers can be approximated can be approximated by taking (i.e., including in augmented training vector 246A) the element-wise maximum of each speech power and the corresponding noise band power;
- 246A: The augmented training vector (generated during step 238 of Fig. 7) to be presented to the model (e.g., a DNN model) for training. For example, augmented training vector 246A may be an example of augmented training data 113B generated by function 103B (of Fig. 1B) for use in one epoch (i.e., the current pass) of training loop 131B of Fig. 1B; and
- 245A-D: Synthesized noise events of noise spectrum 244.

We next describe another embodiment of augmentation applied to training data (e.g., by unit 103B of Fig. 1B) in accordance with the invention. In this embodiment, the augmentation implements and applies a simplified reverberation model. The model is an improved (simplified) version of a band-energy domain reverberation algorithm described in above-referenced US Patent Application Publication No. 2019/0362711. The simplified reverberation model has only two parameters: RT60, and Direct To Reverb Ratio (DRR). Mean free path and source distance are summarized into the DRR parameter.

Elements of Fig. 8 include the following:

- 128B: a set of input (i.e., unaugmented) training data features (e.g., "logmelspec" band powers in dB for a number of Mel-spaced bands over time). Features 128B (which may be referred to as a training vector) may be or include one or more features of one utterance in (i.e., indicated by) unaugmented training set 111B of Fig. 1B, and are assumed to be speech data in the following description;

- 250: One particular frequency band, "i," of training vector 128B to which reverb is to be added. In performing the Fig. 8 method, reverb may be added to each frequency band of vector 128B in turn or to all bands in parallel. The following description of Fig. 8 pertains to augmentation of one particular frequency band (250) of vector 128B;

- 251: $x[i, t]$, one value of band 250 for a time "t", which is an input power in dB for band "i" of data 128B at time "t";

- 252: a step of subtracting parameter 263 (DRR) from the input band power 251, to determine $x[i, t]$ - DRR;

- 253: a step of determining the maximum of $x[i, t]$ - DRR and state[i, t-1] + alpha[i], where "$x[i, t]$ - DRR" is the output of step 252 and "state[i, t-1] + alpha[i]" is the output of step 255;

- 254: A state variable state[i, t], which we update for each frame of vector 128B. For each frame t, step 253 uses state[i, t-1], and then the result of step 253 is written back as state[i, t];

- 255: a step of computing the value "state[i, t-1] + alpha[i]";

- 256: a step of generating noise (e.g., Gaussian noise with a mean of 0 dB and a standard deviation of 3 dB);

- 257: a step of offsetting the reverb tail (the output of step 255) by the noise (generated in step 256);

- 258: a step of determining the maximum of the reverberant energy (the output of step 257) and the direct energy (251). This is a step of combining the reverberant energy and the direct energy, which is an approximation (an approximate implementation) of a step of adding the reverberant energy values to corresponding direct energy values;

- 259: an output power, $y[i, t]$, for band "i" at time "t", which is determined by step 258;

- 260: Reverberant output features (i.e., augmented training data) for use in training a model (features 260 are an example of augmented training data 113B of Fig. 1B, which are used to train model 114B);

- 260A: the output powers 259 for all the times "t", which is one frequency band (the "i"th band) of output features 260, and is generated in response to band 250 of training vector 128B;

- 261: an indication (a dashed line) of the timing with which the steps of Fig. 8 are performed. All elements above line 261 in Fig. 8 (i.e., 262, 263, 262A, 263A, 264, 264A, 265, 266, 266A, and 266B) are generated or performed once per epoch per training vector. All elements below line 261 in Fig. 8 are generated or performed once per frame (of the training vector) per training vector per epoch;

- 262: a parameter indicative of a randomly chosen reverberation time, RT60 (e.g., expressed in milliseconds), for each training vector (128B) for each epoch (e.g., each epoch of training loop 131B of Fig. 1B). Herein "RT60" denotes the time required for the pressure level of sound (emitted from a source) to decrease by 60 dB, after the sound source is abruptly switched off. For example, RT60 parameter 262 could be drawn from a normal distribution with mean 400ms and standard deviation 100ms;

- 262A: a data flow path showing that parameter 262 (also labeled "RT60" in Fig. 8) is used in performing step 264;

- 263: a parameter indicative of a randomly chosen Direct To Reverb Ratio (DRR) value (e.g., expressed in dB) for each training vector for each epoch. For example, DRR parameter 263 could be drawn from a normal distribution with mean 8dB and standard deviation 3dB;

- 263A: a data flow path showing that DRR parameter 263 (also labeled "DRR (dB)" in Fig. 8) is used (to perform step 252) once per frame;

- 264: a step of derating the broadband parameter 262 (RT60) over frequency to account for the phenomenon that most rooms have more reverberant energy at high frequencies than at low frequencies;

- 264A: a derated RT60 parameter (labelled "RT60$_i$") generated in step 263 for the frequency band "i". Each derated parameter (RT60$_i$) is used to augment the data 251 ("$x[i, t]$") for the same frequency band "i";

- 265: a parameter, $\Delta t$, indicative of the length of a frame in time. Parameter $\Delta t$ may be expressed in milliseconds, for example;

- 266: a step of computing coefficients, "alpha[i]", where the index "i" denotes the "i"th frequency band, as follows: alpha$[i] = -60(\Delta t)/\text{RT60}_i$ , where "RT60$_i$" is the parameter 264A and $\Delta t$ is the parameter 265;

- 266B: the coefficient "alpha[i]" generated in step 266 for the frequency band "i"; and

- 266A: a data flow path showing that each coefficient 266B ("alpha[i]") is used (to perform step 255) once per frame.

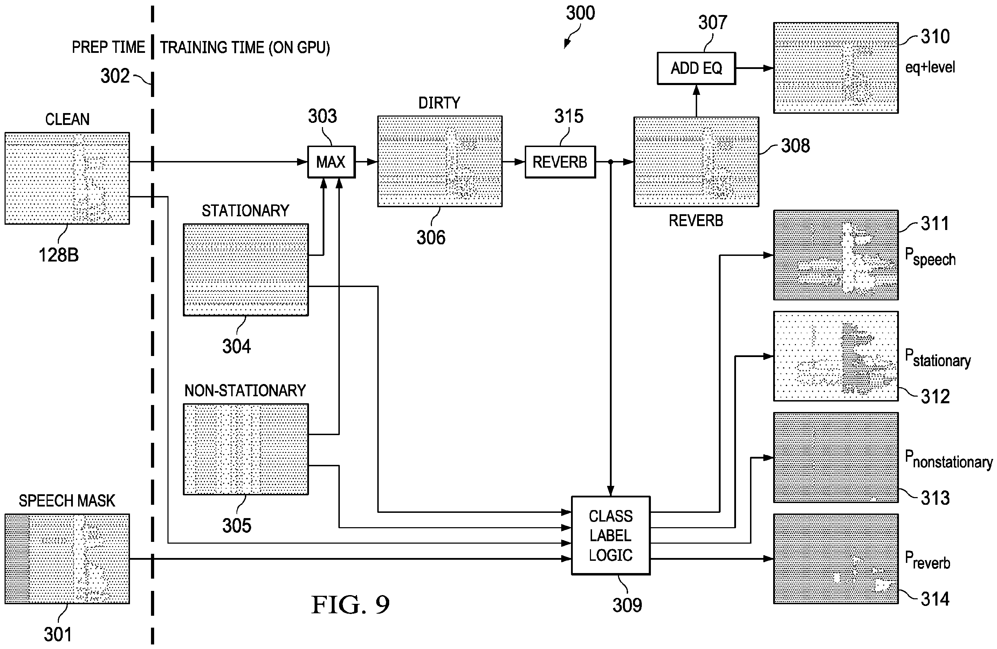

With reference to Fig. 9, we next describe time frequency tile classifier training pipeline 300 which is implemented in some embodiments of the invention. Training pipeline 300 (e.g., implemented in some embodiments of training loop 131B of Fig. 1B) augments training data (input features 128B) in a training loop of a multi-style training method and also generates class label data (311, 312, 313, and 314) in the training loop. The augmented training data (310) and class labels (311-314) can be used (e.g., in the training loop) to train a model (e.g., model 114B of Fig. 1B) so that the trained model (e.g., implemented by classifier 207 of Fig. 3 or another classifier) is useful to classify time-frequency tiles of input features as speech, stationary noise, non-stationary noise, or reverberation. Such a trained model is useful for noise suppression (e.g., including by classifying time-frequency tiles of input features as speech, stationary noise, non-stationary noise, or reverberation, and suppressing unwanted non-speech sounds). Fig. 9 includes steps 303, 315, and 307 which are performed to augment the incoming training data at training time (for example in the "logmelspec" band energy domain on a GPU).

- 300: Time frequency tile classifier training pipeline;
- 128B: Input features, which are acoustic features derived from outputs of a set of microphones (e.g., at least some of the microphones of a system comprising orchestrated smart devices). Features 128B (sometimes referred to as a vector) are organized as time-frequency tiles of data;
- 301: A speech mask which describes the apriori probability that each time-frequency tile (in the clean input vector 128B) contains predominantly speech. The speech mask comprises data values, each of which corresponds to a probability (e.g., in a range including high probabilities and low probabilities). Such a speech mask can be generated, for example, using Gaussian mixture modelling on the levels in each frequency band of vector 128B. For example, a diagonal covariance Gaussian mixture model containing two Gaussians can be used;

- 302: an indication (a line) of separation between a data preparation phase (e.g., phase 130A of Fig. 1B) and a training loop (e.g., training loop 131A of Fig. 1B) of a multi-style training method. Everything to the left of this line (i.e., generation of features 128B and mask 301) occurs in the data preparation phase. Everything to the right of this line occurs per vector per epoch and can be implemented on a GPU;
- 304: Synthesized stationary (or semi-stationary) noise. For example, noise 304 may be an example of synthesized semi-stationary noise generated as is element 237 of Fig. 6. To generate noise 304, one or more random stationary narrowband tones may be included in the spectrum thereof (e.g., as noted in the description of element 236 of Fig. 6);
- 305: Synthesized non-stationary noise. In Fig. 7, element 244 is an example of synthesized non-stationary noise;
- 303: a step of (or unit for) augmenting clean features 128B by combining them with stationary (or semi-stationary) noise 304 and/or non-stationary noise 305. If working in a logarithmic power domain (e.g., dB), the features and noise can be approximately combined by taking the element-wise maximum;
- 306: Dirty features (augmented features) created during step 303 by combining clean features 128B with stationary (or semi-stationary) and/or non-stationary noise;
- 315: a step of (or unit for) augmenting dirty features 306 by applying reverberation (e.g., synthetic reverberation) thereto. This augmentation can be implemented, for example, by the steps performed in the training loop of Fig. 8 (using values generated in the data preparation phase of Fig. 8);
- 308: Augmented features (with reverberation, e.g., synthetic reverberation, added thereto) generated by step 315;
- 307: a step of (or unit for) applying leveling, equalization, and/or microphone cutoff filtering to features 308. This processing is augmentation of features 308, of one or more of the types described above as Level, Microphone Equalization, and Microphone Cutoff augmentation;
- 310: Final augmented features generated by step 307. Features 310 (which may be presented to a system implementing a model to be trained, e.g., to a network of such a system) contain at least some of synthesized stationary (or semi-stationary) noise, non-stationary noise, reverberation, level, microphone equalization and microphone cutoff augmentations;
- 309: a step of (or unit for) class labeling. This step (or unit), identified in Fig. 9 as "class label logic," keeps track of what has been the dominant type of augmentation applied (if any of them is dominant) to generate each time-frequency tile of augmented features 310 throughout the process shown. For example: in (or for) in each time-frequency tile in which clean speech remains the dominant contributor (i.e., if none of augmentations 303, 315, and 307 is considered to be dominant), step/unit 309 records a 1 in its $P_{speech}$ output (311) and 0 for all other outputs (312, 313, and 314); in (or for) each time-frequency tile in which reverberation is the dominant contributor, step/unit 309 will record a 1 in its $P_{reverb}$ output (314) and 0 for all other outputs (311, 312, and 313); and so forth;
- 311, 312, 313, and 314: Training class labels $P_{speech}$ (label 311 indicating that no augmentation is dominant), $P_{stationary}$ (label 312 indicating that stationary or semi-stationary noise augmentation is dominant), $P_{nonstationary}$ (label 313 indicating that non-stationary noise augmentation is dominant), and $P_{reverb}$ (label 314 indicating that reverb augmentation is dominant).

The class labels 311-314 can be compared with the model output (the output of the model being trained) in order to compute a loss gradient to backpropagate during training. A classifier (e.g., a classifier implementing model 114B of Fig. 1B) which has been (or is being) trained using the Fig. 9 scheme could, for example, include an element-wise softmax in its output (e.g., the output of prediction step 105B of the training loop of Fig. 1B) which indicates speech, stationary noise, nonstationary noise, and reverb probabilities in each time-frequency tile. These predicted probabilities could be compared with the class labels 311-314 using, for example, cross entropy loss and gradients backpropagated to update (e.g., in step 106B of the training loop of Fig. 1B) the model parameters.

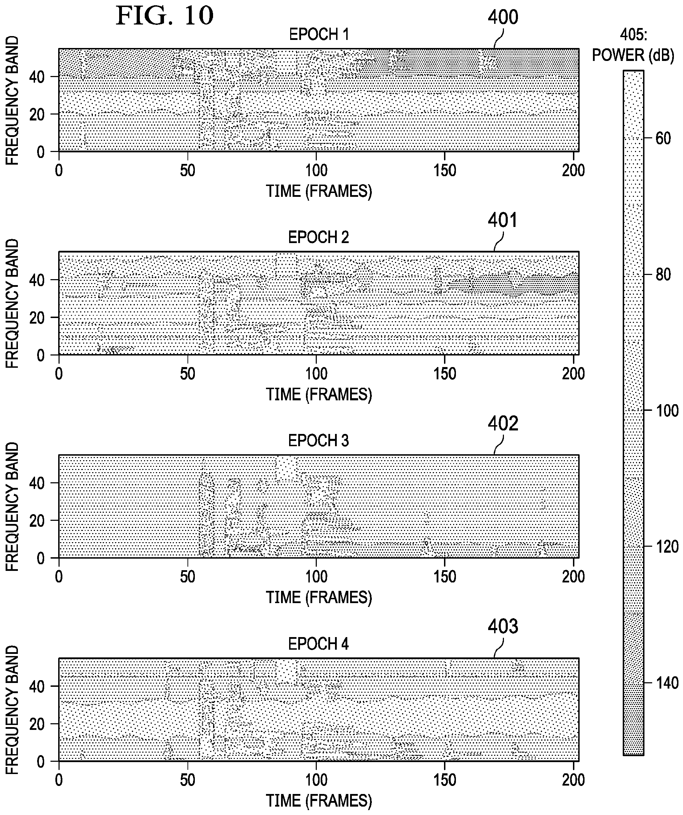

Figure 10 shows examples of four augmented training vectors (400, 401, 402, and 403), each generated by applying a different augmentation to the same training vector (e.g., input features 128B of Fig. 9) for use during a different training epoch of a training loop. Each of the augmented training vectors (400-403) is an example of augmented features 310 (of Fig. 9), which has been generated for use during a different training epoch of a training loop which implements the Fig. 9 method. In Fig. 10:

- augmented training vector 400 is an instance of augmented features 310 on a first training epoch;
- augmented training vector 401 is an instance of augmented features 310 on a second training epoch;
- augmented training vector 402 is an instance of augmented features 310 on a third training epoch; and
- augmented training vector 403: An instance of augmented features 310 on a fourth training epoch.

Each of vectors 400-403 includes banded frequency components (in frequency bands) for each of a sequence of frames, with frequency indicated on the vertical axis and time indicated (in frames) on the horizontal axis. In Fig. 10, scale 405 indicates how shades of (i.e., different degrees of brightness of different areas in) vectors 400-403 correspond to powers in dB.

We next describe an example of simulated echo residuals augmentation with reference to the following Julia 1.1 code listing ("Listing 1"). When executed by a processor (e.g., a processor programmed to implement function 103B of Fig. 1B), the Julia 1.1 code of Listing 1 generates simulated echo residuals (music-like noise, determined using data values indicative of melody, tempo, and pitchiness, as indicated in the code) to be added to training data (e.g., features 111B of Fig. 1B) to be augmented. The residuals may then be added to frames of features (the training data to be augmented) to generate augmented features for use in one epoch of a training loop to train an acoustic model (e.g., an echo cancellation or echo suppression model). More generally, simulated music (or other simulated sound) residuals may be combined with (e.g., added to) training data to generate augmented training data for use in an epoch of a training loop (e.g., an epoch of training loop 131B of Fig. 1B) to train an acoustic model.

Listing 1:

Generate a batch of synthesized music residuals to be combined with a batch of input speech by taking the element-wise maximum, where

- nband: The number of frequency bands.
- nframe: The number of time frames to generate residuals for.
- nvector: The number of vectors to generate in the batch.
- dt_ms: The frame size in milliseconds.
- meandifflog_fband: This describes how the frequency bands are spaced. For an arbitrary array of band center frequencies fband, pass mean(diff(log.(fband))).

The following function generates a 3D array of residual band energies in dB of dimensions (nband, nframe, nvector).

""""

```
function batch_generate_residual(nband::Int, nframe::Int, nvector::Int, dt_ms::X,

meandifflog_fband::X}) where {X<:Real}

    tempo_bpm = X(100) .+ rand(X, 1, 1, nvector)*X(80)

    pitchiness = (X(1) .+ rand(X, 1, 1, nvector).*X(10)) .* X(0.07) ./

coef.meandifflog_fband

    melody = randn(X, 1, 1, nvector) .* X(0.01) ./ meandifflog_fband

    C1 = rand(X, 1, 1, nvector) .* X(20)

    C2 = randn(X, 1, 1, nvector) .* X(10) .- X(5)


    f = 1:nband

    t = 1:nframe


    spectrum = C1 .* cos.(pi .* X.(f) ./ X(nband)) .+ C2 .* cos.(X(2) .* pi .* X.(f) ./

X(nband))

    spectrum = spectrum .- mean(spectrum; dims=1)


    part1 = sin.(X(2) .* pi .* (f .+ t' .* melody) ./ pitchiness)

    part2 = cos.(X(2) .* pi .* t' .* X(60 * 4) .* coef.dt_ms ./ (tempo_bpm[1]*X(1000)))


    spectrum .+ X(10) .* part1 .* part2

end
```

We next describe another example of simulated echo residuals augmentation with reference to the following Julia 1.1 code listing ("Listing 1B"). When executed by a processor (e.g., a processor programmed to implement function 103B of Fig. 1B), the code of Listing 1B generates simulated echo residuals (synthesized music-like noise) to be added to training data (e.g., features 111B of Fig. 1B) to be augmented. The amount (magnitude) of simulated echo residuals is varied according to the position of an utterance in the training data (a training vector).

Listing 1B:

Generate a batch of synthesized music residuals to be combined with a batch of input speech by taking the element-wise maximum.

- nband: The number of frequency bands.
- nframe: The number of time frames to generate residuals for.
- nvector: The number of vectors to generate in the batch.
- dt_ms: The frame size in milliseconds.
- meandifflog_fband: This describes how the frequency bands are spaced. For an arbitrary array of band center frequencies fband, pass mean(diff(log.(fband))).
- utterance_spectrum: The band energies corresponding to the input speech, a 3D array in dB of dimensions (nband, nframe, nvector).

""

```
function batch_generate_residual_on_utterances(nband::Int, nframe::Int, nvector::Int,
dt_ms::X, meandifflog_fband::X, utterance_spectrum::Array{X}}) where {X<:Real}
        t = 1:nframe
        mag1 = rand(X, 1, 1, nvector)
        slope1 = rand(X, 1, 1, nvector)
        u = utterance_spectrum .> -30.0
        spectrum = generate_residual(nband, nframe, nvector, dt_ms,
        meandifflog_fband)
            .* X(5) .* (mag1 .+ slope1 .* (t ./ nframe) .* u)
    end
```

An example implementation of augmentation of training data by adding variable spectrum stationary noise thereto (e.g., as described above with reference to Fig. 6) will be described with reference to the following Julia 1.4 code listing ("Listing 2"). When executed by a processor (e.g., a processor programmed to implement function 103B of Fig. 1B), the code of Listing 2 generates stationary noise (having a variable spectrum), to be combined with (e.g., in step 238 of Fig. 6) the unaugmented training data to generate augmented training data for use in training an acoustic model.

In the listing ("Listing 2"):

the training data being augmented (e.g., data 128B of Fig. 6) are provided in the argument x to the function batch_generate_stationary_noise. In this example it is a three dimensional array. The first dimension is frequency band. The second dimension is time. The third dimension is the vector number within the batch (a typical deep learning system will divide the training set into batches or "mini-batches" and update the model after running the predict step 105B on each batch); and

the speech powers (e.g., those generated in step 231 of Fig. 6) are passed in the nep argument to the batch_generate_stationary_noise function (where "nep" here denotes Noise Equivalent Power and can be computed using the process shown in Fig 4). Nep is an array because there is a speech power for each training vector in the batch.

Listing 2

```
Base.@kwdef struct StationaryNoiseParams
        snr_mean_dB::Float32 = 20f0
        snr_stddev_dB::Float32 = 30f0
        c_stddev_dB::AbstractVector{Float32} = [20f0; 20f0; 20f0; 20f0]
        dcdt_stddev_dB_per_s::AbstractVector{Float32} = [10f0; 10f0; 10f0; 10f0]
end


struct StationaryNoiseCoef{X<:Real}
        params::StationaryNoiseParams
        dcdt_stddev_dB_per_frame::AbstractVector{Float32}
        basis::AbstractMatrix{X}
end


function StationaryNoiseCoef(params::StationaryNoiseParams, fband::AbstractVector{X},
dt_ms::X) where {X<:Real}
        basis = ARun.compute_cepstral_basis(X, 1+length(params.c_stddev_dB),
        length(fband))[2:end,:]
        dcdt_stddev_dB_per_frame = params.dcdt_stddev_dB_per_s .* dt_ms ./ X(1000)
        StationaryNoiseCoef(params, dcdt_stddev_dB_per_frame, basis)
end


function batch_generate_stationary_noise(coef::StationaryNoiseCoef,
x::AbstractArray{X,3}, nep::AbstractVector{X}, xrandn::Function) where {X<:Real}
        # Draw initial cepstral coefficients
        c = xrandn(X, length(coef.params.c_stddev_dB), 1, size(x, 3)) .*
```

```
coef.params.c_stddev_dB

    # Draw delta cepstral coefficients

    dc = xrandn(X, length(coef.dcdt_stddev_dB_per_frame), 1, size(x, 3)) .*
coef.dcdt_stddev_dB_per_frame

    # Draw SNR

    level = reshape(nep, 1, 1, length(nep)) .- xrandn(X, 1, 1, length(nep)) .*
coef.params.snr_stddev_dB .- coef.params.snr_mean_dB


    cs = c .+ dc.*permutedims(1:size(x,2))


    y = similar(x)

    for v = 1:size(y, 3)

        y[:,:,v] .= coef.basis' * cs[:,:,v]

    end

    y .+ level

end
```

An example implementation of augmentation of training data by adding non-stationary noise thereto (e.g., as described above with reference to Fig. 7) will be described with reference to the following Julia 1.4 code listing ("Listing 3"). When executed by a processor (e.g., a GPU or other processor programmed to implement function 103B of Fig. 1B), the code of Listing 3 generates non-stationary noise, to be combined with (e.g., in step 238 of Fig. 7) the unaugmented training data to generate augmented training data for use in training an acoustic model.

In the listing ("Listing 3"):

the incoming training data (e.g., data 128B of Fig. 7) are presented in the x parameter to the batch_generate_non-stationary_noise function. As in Listing 2, it is a 3D array;

the speech powers (e.g., those generated in step 231 of Fig. 7) are presented in the nep argument to the batch_generate_nonstationary_noise function;

the "cepstrum_dB_mean" data describe the cepstral mean in dB for generating random event cepstra (element 241 of Fig. 7); and

the "cepstrum_dB_stddev" data are the standard deviation for drawing the random event cepstra (element 241 of Fig. 7). In this example we draw 6-dimensional cepstra so these vectors have 6 elements each;

the "attack_cepstrum_dB_per_s_mean" and "attack_cepstrum_dB_per_s_stddev" data describe the distribution from which random attack rates are to be drawn (element 242 of Fig. 7); and

the "release_cepstrum_dB_per_s_mean" and "release_cepstrum_dB_per_s_stddev" data describe the distribution from which random release rates are to be drawn (element 242 of Fig. 7).

Listing 3:

```
Base.@kwdef struct NonStationaryNoiseParams
    cepstrum_dB_mean::AbstractVector{Float32} = [-40f0; 0f0; 0f0; 0f0; 0f0; 0f0]
    cepstrum_dB_stddev::AbstractVector{Float32} = [10f0; 5f0; 5f0; 5f0; 5f0; 5f0]
    attack_cepstrum_dB_per_s_mean::AbstractVector{Float32} = [-1000f0; 0f0; 0f0; 0f0; 0f0
0f0]
    attack_cepstrum_dB_per_s_stddev::AbstractVector{Float32} = [200f0; 10f0; 10f0; 10f0;
10f0; 10f0]
    release_cepstrum_dB_per_s_mean::AbstractVector{Float32} = [-600f0; 0f0; 0f0; 0f0; 0f0;
0f0]
    release_cepstrum_dB_per_s_stddev::AbstractVector{Float32} = [200f0; 10f0; 10f0; 10f0;
10f0; 10f0]
end


struct NonStationaryNoiseCoef{X<:Real}
    params::NonStationaryNoiseParams
    basis::AbstractMatrix{X}
    dt_between_events_frames_mean::X
    dt_between_events_frames_stddev::X
    attack_cepstrum_dB_per_frame_mean::AbstractVector{Float32}
    attack_cepstrum_dB_per_frame_stddev::AbstractVector{Float32}
    release_cepstrum_dB_per_frame_mean::AbstractVector{Float32}
    release_cepstrum_dB_per_frame_stddev::AbstractVector{Float32}
end


"Convert banding and time-step independent parameters into coefficients to be used in
batch_generate_nonstationary_noise.

- params: NonStationaryNoiseParams
- fband: Array of band center frequencies in Hz
- dt_ms: Frame length (milliseconds)

"
function NonStationaryNoiseCoef(params::NonStationaryNoiseParams,
fband::AbstractVector{X}, dt_ms::X) where {X<:Real} basis = ARun.unscaled_cepstral_basis(X, length(params.cepstrum_dB_mean), length(fband)) attack_cepstrum_dB_per_frame_mean = params.attack_cepstrum_dB_per_s_mean * dt_ms/X(1000)
```

attack_cepstrum_dB_per_frame_stddev = params.attack_cepstrum_dB_per_s_stddev * dt_ms/X(1000) release_cepstrum_dB_per_frame_mean = params.release_cepstrum_dB_per_s_mean * dt_ms/X(1000) release_cepstrum_dB_per_frame_stddev = params.release_cepstrum_dB_per_s_stddev * dt_ms/X(1000) NonStationaryNoiseCoef{X}(params, basis, 25f0, 10f0, attack_cepstrum_dB_per_frame_mean, attack_cepstrum_dB_per_frame_stddev, release_cepstrum_dB_per_frame_mean, release_cepstrum_dB_per_frame_stddev) end

"Helper function to call batch_generate_nonstationary_noise() with Base.randn() as the random number generator."

```
function batch_generate_nonstationary_noise(coef::NonStationaryNoiseCoef,
x::AbstractArray{X,3}, nep::AbstractVector{X}) where {X<:Real} batch_generate_nonstationary_noise(coef, x, nep, randn)
end
```

"Helper function to generate the cepstrum for one event (243). "
```
function batch_write_nonstationary_event!(c::AbstractArray{X}, peak_cepstrum, attack_dcepstrum, release_dcepstrum, t, attack_time, release_time) where {X<:Real}
```

```
    c[:, (t-attack_time+1):t, :] .= max.(c[:, (t-attack_time+1):t, :], peak_cepstrum .+ (((attack_time-1):-1:0)').*attack_dcepstrum)
    c[:, (t+1):(t+release_time), :] .= max.(c[:, (t+1):(t+release_time), :], peak_cepstrum .+ ((1:release_time)').*release_dcepstrum)
    end
```

Generate nonstationary noise (band energies in dB) of the same size as input batch x. x is a 3D array describing the band energies in dB of a batch of training vectors in which:

- dimension 1 is frequency band
- dimension 2 is time frame
- dimension 3 indexes over the vectors in the batch

nep is the speech power (for example, Noise Equivalent Power) for each of the vectors in the batch.

xrandn is a function which draws arrays of numbers from a standard normal distribution. For example, when operating on the CPU use Base.randn(), but if operating on GPU use CuArrays.randn().

```
function batch_generate_nonstationary_noise(coef::NonStationaryNoiseCoef, x::AbstractArray{X,3}, nep::AbstractVector{X}, xrandn::Function) where {X<:Real} # We will generate all the noise cepstrally and then transform it to a spectrum later
```

```
    c = similar(x, length(coef.params.cepstrum_dB_mean), size(x,2), size(x,3))
    s = similar(x)
    cnep = similar(nep, length(coef.params.cepstrum_dB_stddev), 1, length(nep))
    cnep .= 0f0
    cnep[1,1,:] .= nep
    c[1,:,:] .= -200f0 # Initialise to low level
    c[2:end,:,:] .= 0f0 # Initialise to flat spectrum
    # For simplicity on GPU we use the same event times across the whole batch
    # draw a random time until first event
```

```
    t = max(round(Int, randn(X) * coef.dt_between_events_frames_stddev + coef.dt_between_events_frames_mean), 1)
```

```
while t < size(x,2)
# draw a random event length
attack_time = min(t, 20)
release_time = min(size(x,2)-t, 20)
# choose different random cepstra for the event across the vectors in the batch
peak_cepstrum = xrandn(X, length(coef.params.cepstrum_dB_stddev), 1, size(c,3)) .*
coef.params.cepstrum_dB_stddev .+ coef.params.cepstrum_dB_mean .+ cnep
attack_dcepstrum = (xrandn(X, length(coef.attack_cepstrum_dB_per_frame_stddev), 1,
size(c,3)) .* coef.attack_cepstrum_dB_per_frame_stddev .+
coef.attack_cepstrum_dB_per_frame_mean)
release_dcepstrum = (xrandn(X, length(coef.release_cepstrum_dB_per_frame_stddev),
1, size(c,3)) .* coef.release_cepstrum_dB_per_frame_stddev .+
coef.release_cepstrum_dB_per_frame_mean)
# write the event into the cepstral buffer
batch_write_nonstationary_event!(c, peak_cepstrum, attack_dcepstrum,
release_dcepstrum, t, attack_time, release_time)
# draw a random time until next event
dt = max(round(Int, randn(X) * coef.dt_between_events_frames_stddev +
coef.dt_between_events_frames_mean), 1)
t += dt
end
for v = 1:size(x,3)
# transform cepstrum to spectrum
s[:,:,v] = coef.basis' * c[:,:,v]
end
s
end
```

An example implementation of augmentation of training data (input features) to generate reverberant training data (as described above with reference to Fig. 8) will be described with reference to the following Julia 1.4 code listing ("Listing 4"). When executed by a processor (e.g., a GPU or other processor programmed to implement function 103B of Fig. 1B), the code of Listing 4 generates reverberant energy values to be combined with the unaugmented training data and combines (i.e., implements step 258 of Fig. 8) the values with the training data to generate augmented training data for use in training an acoustic model.

Listing 4:

Global parameters affecting all simulated reverb

-     'c_m_per_s': Speed of sound in the medium (m/s)
-     'fsplit': High/low frequency split point (Hz)

Base.@kwdef struct ReverbDomain{P<:Real}

```
c_m_per_s::P
fsplit::P
end
Sensible defaults for simulating reverb in air.
reverb_in_air(::Type{P}) where {P<:Real} = ReverbDomain(P(343), P(1000))
```

-     'rt60_ms_mean': mean RT60 (milliseconds)
-     'rt60_ms_stddev': RT60 standard deviation (milliseconds)
-     'drr_dB_mean': mean direct-to-reverb ratio (dB)
-     'drr_dB_stddev': direct-to-reverb ratio standard deviation (dB)
-     'noise_dB_stddev': decay noise (standard deviation from perfect linear decay) (dB)

Base.@kwdef struct BatchReverbParams{P<:Real}

$$domain::ReverbDomain\{P\} = reverb\_in\_air(P)$$

$$rt60\_ms\_mean::P \quad = P(800)$$

$$\text{rt60\_ms\_stddev::P} = P(200)$$

$$\text{drr\_dB\_mean::P} = P(8)$$

$$\text{drr\_dB\_stddev::P} = P(3)$$

$$\text{noise\_dB\_stddev::P} = P(2)$$

```
end
struct BatchReverbCoef{X<:Real}
rt60_ms_derate::AbstractVector{X} # How many ms to derate RT60 at each
frequency band
dt_ms::X
params::BatchReverbParams{X}
end
"""
"""
function BatchReverbCoef(params::BatchReverbParams{X},
fband::AbstractVector{X}, dt_ms::X) where {X<:Real}
rt60_ms_derate = [(f <= params.domain.fsplit) ? X(0f0) : X(-100) for f in fband]
BatchReverbCoef(rt60_ms_derate, dt_ms, params)
end
"""
```

Draw random reverb parameters from distributions, return a reverberated version of 'x'.
x is a 3D array describing the band energies in dB of a batch of training vectors in which:

- dimension 1 is frequency band
- dimension 2 is time frame
- dimension 3 indexes over the vectors in the batch

This function returns a tuple (y,mask) where y is a 3D array of reverberated band energies of the same size as x.
Mask is a 3D array of the same size as y which is:

- 1 for each time frequency tile in which reverberant energy has been added
- 0 otherwise

```
function batch_reverb_mask(coef::BatchReverbCoef{X}, x::AbstractArray{X,3},
 rng::AbstractRNG) where {X<:Real}
rt60_ms = max.(X(1), coef.params.rt60_ms_mean .+ randn(rng, X,
size(x,3))*coef.params.rt60_ms_stddev)
drr_dB = max.(X(0), coef.params.drr_dB_mean .+ randn(rng, X,
size(x,3))*coef.params.drr_dB_stddev)
batch_rt60_ms = rt60_ms' .+ coef.rt60_ms_derate
feedback = X(-60) .* (coef.dt_ms ./ max.(batch_rt60_ms, X(1)))
noise_dB = randn(rng, X, size(x)) .* coef.params.noise_dB_stddev
y = similar(x)
```

```
mask = similar(x)
for v = 1:size(x,3)
    for i = 1:size(x,1)
        state = x[i,1,v]
        for t = 1:size(x,2)
            decay = state + feedback[i,v]
            state = max(decay, x[i,t,v] .- drr_dB[v])
            y[i,t,v] = max(x[i,t,v], decay + noise_dB[i,t,v])
            mask[i,t,v] = X(decay > x[i,t,v])
        end
    end
end
y, mask
end
```

Aspects of the invention include a system or device configured (e.g., programmed) to perform any embodiment of the inventive method, and a tangible computer readable medium (e.g., a disc) which stores code for implementing any embodiment of the inventive method or steps thereof. For example, the inventive system can be or include a programmable general purpose processor, digital signal processor, or microprocessor, programmed with software or firmware and/or otherwise configured to perform any of a variety of operations on data, including an embodiment of the inventive method or steps thereof. Such a general purpose processor may be or include a computer system including an input device, a memory, and a processing subsystem that is programmed (and/or otherwise configured) to perform an embodiment of the inventive method (or steps thereof) in response to data asserted thereto.

Some embodiments of the inventive system are implemented as a configurable (e.g., programmable) digital signal processor (DSP) or graphics processing unit (GPU) that is configured (e.g., programmed and otherwise configured) to perform required processing on audio signal(s), including performance of an embodiment of the inventive method or steps thereof. Alternatively, embodiments of the inventive system (or elements thereof) are implemented as a general purpose processor (e.g., a personal computer (PC) or other computer system or microprocessor, which may include an input device and a memory) which is programmed with software or firmware and/or otherwise configured to perform any of a variety of operations including an embodiment of the inventive method. Alternatively, elements of some embodiments of the inventive system are implemented as a general purpose processor, or GPU, or DSP configured (e.g., programmed) to perform an embodiment of the inventive method, and the system also includes other elements (e.g., one or more loudspeakers and/or one or more microphones). A general purpose processor configured to perform an embodiment of the inventive method would typically be coupled to an input device (e.g., a mouse and/or a keyboard), a memory, and a display device.

Another aspect of the invention is a computer readable medium (for example, a disc or other tangible storage medium) which stores code for performing (e.g., coder executable to perform) any embodiment of the inventive method or steps thereof.

While specific embodiments of the present invention and applications of the invention have been described herein, it will be apparent to those of ordinary skill in the art that many variations on the embodiments and applications described herein are possible without departing from the scope of the invention described and claimed herein. It should be understood that while certain forms of the invention have been shown and described, the invention is not to be limited to the specific embodiments described and shown or the specific methods described.

**Claims**

1.  A method of training an acoustic model (114B), wherein the training includes a data preparation phase (130B) implemented on a data preparation subsystem, and a training loop (131B) implemented on a training subsystem, wherein the training loop (131B) follows the data preparation phase (130B) and includes a plurality of successive epochs, said method including:

in the data preparation phase (130B):

providing time domain training data (110), wherein the training data (110) are or include at least one example of audio data,
extracting at least one feature (111B) of the time domain training data (110), and
providing the at least one feature (111B) to the training subsystem;

during each epoch of the training loop:

augmenting the at least one feature (111B), wherein the augmentation occurs in at least one feature domain, thereby generating augmented training data (113B) which is temporary and only used during training in one epoch; and
using at least some of the augmented training data (113B) to train the model (114B),

wherein the training data (110) are indicative of features comprising frequency bands, and the augmentation occurs in the frequency domain, and
wherein augmenting the at least one feature comprises drawing a random Signal to Noise Ratio, SNR, from an SNR distribution (232) and drawing a random stationary noise spectrum shape (233) from a distribution of noise spectrum shapes, and determining the augmentation as noise whose power as a function of frequency is determined from the drawn random SNR and the drawn random stationary noise spectrum.

2. The method of claim 1, wherein different subsets of the augmented training data (113B) are generated during the training loop (131B), for use in different epochs of the training loop (131B), by augmenting at least some of the training data (111B) using different sets of augmentation parameters drawn from a plurality of probability distributions, and/or

wherein the training data are indicative of a plurality of utterances of a user, and/or
wherein the frequency bands each occupy a constant proportion of the Mel spectrum, or are equally spaced in log frequency, or are equally spaced in log frequency with the log scaled such that the features represent the band powers in decibels (dB).

3. The method of claim 1, wherein the acoustic model (114B) is a speech analytics model or a noise suppression model.

4. The method of claim 1, wherein said augmenting includes at least one of adding fixed spectrum stationary noise, adding variable spectrum stationary noise, adding noise including one or more random stationary narrowband tones, adding reverberation, adding non-stationary noise, adding simulated echo residuals, simulating microphone equalization, simulating microphone cutoff, or varying broadband level, and/or

wherein said augmenting is implemented in or on one or more Graphics Processing Units (GPUs), and/or
wherein said augmenting is performed in a manner determined in part from the training data (110).

5. The method of claim 1, wherein the training is implemented by a control system, the control system includes one or more processors and one or more devices implementing non-transitory memory, the training includes providing the training data to the control system, and the training produces a trained acoustic model (114B), wherein the method includes:
storing parameters of the trained acoustic model (114B) in one or more of the devices.

6. A system configured for training an acoustic model (114B), wherein the training includes a data preparation phase (130B) and a training loop (131B) which follows the data preparation phase (130B), wherein the training loop includes a plurality of successive epochs, said system including:

a data preparation subsystem, coupled and configured to implement the data preparation phase (130B), including receiving or generating time domain training data (110), wherein the time domain training data (110) are or include at least one example of audio data, the data preparation subsystem being further configured to extract at least one feature (111B) of the time domain training data and provide the at least one feature (111B) to the training subsystem; and
a training subsystem, coupled to the data preparation subsystem and configured to augment the at least one feature (111B) during each epoch of the training loop,
wherein the augmentation occurs in at least one feature domain, thereby generating augmented training data (113B) which is temporary and only used during training in one epoch, and to use at least some of the augmented training data (113B) to train the model (114B) during each epoch of the training loop,

wherein the training data (110) are indicative of features comprising frequency bands, and the augmentation occurs in the frequency domain, and

wherein augmenting the at least one feature comprises drawing a random Signal to Noise Ratio, SNR, from an SNR distribution (232) and drawing a random stationary noise spectrum shape from a distribution of noise spectrum shapes (233), and determining the augmentation as noise whose power as a function of frequency is determined from the drawn random SNR and the drawn random stationary noise spectrum.

7. The system of claim 6,

wherein the training subsystem is configured to generate, during the training loop (131B), different subsets of the augmented training data (113B), for use in different epochs of the training loop (131B), including by augmenting at least some of the training data (110) using different sets of augmentation parameters drawn from a plurality of probability distributions, and/or
wherein the training data are indicative of a plurality of utterances of a user.

8. The system of claim 6, wherein the acoustic model is a speech analytics model or a noise suppression model.

9. The system of claim 6, wherein the training subsystem is configured to train a deep neural network (DNN), or a convolutional neural network (CNN), or a recurrent neural network (RNN), or an HMM-GMM acoustic model.

10. The system of claim 6,

wherein the training subsystem is configured to augment the training data (111B) including by performing at least one of adding fixed spectrum stationary noise, adding variable spectrum stationary noise, adding noise including one or more random stationary narrowband tones, adding reverberation, adding non-stationary noise, adding simulated echo residuals, simulating microphone equalization, simulating microphone cutoff, or varying broadband level, and/or
is implemented in or on one or more Graphics Processing Units (GPUs), and/or
is configured to augment the training data (111B) in a manner determined in part from said training data.

11. The system of claim 6, wherein the frequency bands each to occupy a constant proportion of the Mel spectrum, or are equally spaced in log frequency, or are equally spaced in log frequency with the log scaled such that the features represent the band powers in decibels (dB).

12. The system of claim 6, wherein the training subsystem includes one or more processors and one or more devices implementing non-transitory memory, and the training subsystem is configured to produce a trained acoustic model and to store parameters of the trained acoustic model in one or more of the devices.

**Patentansprüche**

1. Verfahren zum Trainieren eines akustischen Modells (114B), wobei das Trainieren eine Datenaufbereitungsphase (130B), die in einem Datenaufbereitungs-Subsystem implementiert ist, und eine Trainingsschleife (131B), die in einem Trainings-Subsystem implementiert ist, beinhaltet, wobei die Trainingsschleife (131B) auf die Datenaufbereitungsphase (130B) folgt und eine Vielzahl von aufeinanderfolgenden Epochen beinhaltet, wobei das Verfahren einschließt:

in der Datenaufbereitungsphase (130B):

Bereitstellen von Zeitdomänen-Trainingsdaten (110), wobei die Trainingsdaten (110) mindestens ein Beispiel von Audiodaten sind oder einschließen,
Extrahieren von mindestens einem Merkmal (111B) der Zeitdomänen-Trainingsdaten (110) und
Bereitstellen des mindestens einen Merkmals (111B) für das Trainings-Subsystem;

während jeder Epoche der Trainingsschleife:

Erweitern des mindestens einen Merkmals (111B), wobei das Erweitern in mindestens einer Merkmalsdomäne erfolgt, wodurch erweiterte Trainingsdaten (113B) erzeugt werden, die temporär sind und nur während des Trainierens in einer Epoche verwendet werden; und

Verwenden von mindestens einigen der erweiterten Trainingsdaten (113B) zum Trainieren des Modells (114B),

wobei die Trainingsdaten (110) Merkmale anzeigen, die Frequenzbänder umfassen, und die Erweiterung im Frequenzbereich erfolgt, und

wobei das Erweitern des mindestens einen Merkmals Ziehen eines zufälligen Signal-Rausch-Verhältnisses, SNR, aus einer SNR-Verteilung (232) und Ziehen einer zufälligen stationären Rauschspektrumsform (233) aus einer Verteilung von Rauschspektrumsformen umfasst, und Bestimmen der Erweiterung als Rauschen, dessen Leistung als eine Funktion der Frequenz aus dem gezogenen zufälligen SNR und dem gezogenen zufälligen stationären Rauschspektrum bestimmt wird.

2. Verfahren nach Anspruch 1, wobei unterschiedliche Teilmengen der erweiterten Trainingsdaten (113B) während der Trainingsschleife (131B) zur Verwendung in unterschiedlichen Epochen der Trainingsschleife (131B) erzeugt werden, indem mindestens einige der Trainingsdaten (111B) unter Verwendung unterschiedlicher Sätze von Erweiterungsparametern aus einer Vielzahl von Wahrscheinlichkeitsverteilungen erweitert werden, und/oder

wobei die Trainingsdaten eine Vielzahl von Äußerungen eines Benutzers anzeigen, und/oder

wobei die Frequenzbänder jeweils einen konstanten Anteil des Mel-Spektrums einnehmen, oder in logarithmischer Frequenz gleichmäßig beabstandet sind, oder in logarithmischer Frequenz gleichmäßig beabstandet sind, wobei der Logarithmus so skaliert ist, dass die Merkmale die Bandleistungen in Dezibel (dB) darstellen.

3. Verfahren nach Anspruch 1, wobei das akustische Modell (114B) ein Sprachanalysemodell oder ein Rauschunterdrückungsmodell ist.

4. Verfahren nach Anspruch 1, wobei das Erweitern mindestens eines von Hinzufügen von stationärem Rauschen mit festem Spektrum, Hinzufügen von stationärem Rauschen mit variablem Spektrum, Hinzufügen von Rauschen, das einen oder mehrere zufällige stationäre Schmalbandtöne einschließt, Hinzufügen von Nachhall, Hinzufügen von nicht-stationärem Rauschen, Hinzufügen von simulierten Echoresten, Simulieren der Mikrofonentzerrung, Simulieren der Mikrofonabschaltung oder Variieren des Breitbandpegels einschließt, und/oder

wobei das Erweitern in oder auf einer oder mehreren Grafikverarbeitungseinheiten (GPUs) implementiert ist, und/oder

wobei das Erweitern in einer Weise durchgeführt wird, die zum Teil aus den Trainingsdaten (110) bestimmt wird.

5. Verfahren nach Anspruch 1, wobei das Trainieren durch ein Steuersystem implementiert wird, das Steuersystem einen oder mehrere Prozessoren und eine oder mehrere Vorrichtungen, die einen nichtflüchtigen Speicher implementieren, einschließt, das Trainieren das Bereitstellen der Trainingsdaten an das Steuersystem einschließt, und das Trainieren ein trainiertes akustisches Modell (114B) erzeugt, wobei das Verfahren einschließt:

Speichern von Parametern des trainierten akustischen Modells (114B) in einer oder mehreren der Vorrichtungen.

6. System, konfiguriert zum Trainieren eines akustischen Modells (114B), wobei das Trainieren eine Datenaufbereitungsphase (130B) und eine Trainingsschleife (131B) einschließt, die auf die Datenaufbereitungsphase (130B) folgt, wobei die Trainingsschleife eine Vielzahl von aufeinanderfolgenden Epochen einschließt, wobei das System einschließt:

ein Datenaufbereitungs-Subsystem, das gekoppelt und konfiguriert ist, um die Datenaufbereitungsphase (130B) zu implementieren, einschließlich Empfangen oder Erzeugen von Zeitdomänen-Trainingsdaten (110), wobei die Zeitdomänen-Trainingsdaten (110) mindestens ein Beispiel von Audiodaten sind oder einschließen, wobei das Datenaufbereitungs-Subsystem weiter konfiguriert ist, um mindestens ein Merkmal (111B) aus den Zeitdomänen-Trainingsdaten zu extrahieren und das mindestens eine Merkmal (111B) dem Trainings-Subsystem bereitzustellen; und

ein Trainings-Subsystem, das mit dem Datenaufbereitungs-Subsystem gekoppelt und konfiguriert ist, um das mindestens eine Merkmal (111B) während jeder Epoche der Trainingsschleife zu erweitern,

wobei die Erweiterung in mindestens einer Merkmalsdomäne erfolgt, wodurch erweiterte Trainingsdaten (113B) erzeugt werden, die temporär sind und nur während des Trainings in einer Epoche verwendet werden, und um mindestens einige der erweiterten Trainingsdaten (113B) zu verwenden, um das Modell (114B) während jeder Epoche der Trainingsschleife zu trainieren,

wobei die Trainingsdaten (110) Merkmale anzeigen, die Frequenzbänder umfassen, und die Erweiterung im Frequenzbereich erfolgt, und

wobei das Erweitern des mindestens einen Merkmals Ziehen eines zufälligen Signal-Rausch-Verhältnisses, SNR, aus einer SNR-Verteilung (232) und Ziehen einer zufälligen stationären Rauschspektrumsform aus einer Verteilung von Rauschspektrumsformen (233) umfasst, und Bestimmen der Erweiterung als Rauschen, dessen Leistung als eine Funktion der Frequenz aus dem gezogenen zufälligen SNR und dem gezogenen zufälligen stationären Rauschspektrum bestimmt wird.

7. System nach Anspruch 6, wobei das Trainings-Subsystem konfiguriert ist, um während der Trainingsschleife (131B) verschiedene Teilmengen der erweiterten Trainingsdaten (113B) zur Verwendung in verschiedenen Epochen der Trainingsschleife (131B) zu erzeugen, einschließlich durch Erweitern mindestens einiger der Trainingsdaten (110) unter Verwendung verschiedener Sätze von Erweiterungsparametern, die aus einer Vielzahl von Wahrscheinlichkeitsverteilungen gezogen werden, und/oder

wobei die Trainingsdaten eine Vielzahl von Äußerungen eines Benutzers anzeigen.

8. System nach Anspruch 6, wobei das akustische Modell ein Sprachanalysemodell oder ein Rauschunterdrückungsmodell ist.

9. System nach Anspruch 6, wobei das Trainingssubsystem konfiguriert ist, um ein tiefes neuronales Netzwerk (DNN) oder ein neuronales Faltungsnetzwerk (CNN) oder ein rekurrentes neuronales Netzwerk (RNN) oder ein HMM-GMM-akustisches Modell zu trainieren.

10. System nach Anspruch 6, wobei das Trainings-Subsystem konfiguriert ist, um die Trainingsdaten (111B) zu erweitern, einschließlich durch Ausführen von mindestens einem von Hinzufügen von stationärem Rauschen mit festem Spektrum, Hinzufügen von stationärem Rauschen mit variablem Spektrum, Hinzufügen von Rauschen, das einen oder mehrere zufällige stationäre Schmalbandtöne einschließt, Hinzufügen von Nachhall, Hinzufügen von nicht-stationärem Rauschen, Hinzufügen von simulierten Echoresten, Simulieren der Mikrofonentzerrung, Simulieren der Mikrofonabschaltung oder Variieren des Breitbandpegels, und/oder

in oder auf einer oder mehreren Grafikverarbeitungseinheiten (GPUs) implementiert ist, und/oder konfiguriert ist, um die Trainingsdaten (111B) in einer Weise zu erweitern, die zum Teil aus den Trainingsdaten bestimmt wird.

11. System nach Anspruch 6, wobei die Frequenzbänder jeweils einen konstanten Anteil des Mel-Spektrums einnehmen, oder in logarithmischer Frequenz gleichmäßig beabstandet sind, oder in logarithmischer Frequenz gleichmäßig beabstandet sind, wobei der Logarithmus so skaliert ist, dass die Merkmale die Bandleistungen in Dezibel (dB) darstellen.

12. System nach Anspruch 6, wobei das Trainings-Subsystem einen oder mehrere Prozessoren und eine oder mehrere Vorrichtungen einschließt, die einen nichtflüchtigen Speicher implementieren, und das Trainings-Subsystem konfiguriert ist, um ein trainiertes akustisches Modell zu erzeugen und Parameter des trainierten akustischen Modells in einer oder mehreren der Vorrichtungen zu speichern.

**Revendications**

1. Procédé d'entraînement d'un modèle acoustique (114B), dans lequel l'entraînement inclut une phase de préparation de données (130B) mise en œuvre sur un sous-système de préparation de données, et une boucle d'entraînement (131B) mise en œuvre sur un sous-système d'entraînement, dans lequel la boucle d'entraînement (131B) suit la phase de préparation de données (130B) et inclut une pluralité d'époques successives, ledit procédé incluant :

dans la phase de préparation des données (130B) :

la fourniture de données d'entraînement du domaine temporel (110), dans lequel les données d'entraînement (110) sont ou incluent au moins un exemple de données audio,
l'extraction d'au moins une caractéristique (111B) des données d'entraînement du domaine temporel (110), et

la fourniture de la au moins une fonctionnalité (111B) au sous-système d'entraînement ;

pendant chaque époque de la boucle d'entraînement :

l'augmentation de la au moins une caractéristique (111B), dans lequel l'augmentation se produit dans au moins un domaine de caractéristique, générant ainsi des données d'entraînement augmentées (113B) qui sont temporaires et utilisées uniquement pendant l'entraînement dans une époque ; et
en utilisant au moins certaines des données d'entraînement augmentées (113B) pour l'entraînement du modèle (114B),

dans lequel les données d'entraînement (110) sont indicatives de caractéristiques comprenant des bandes de fréquence, et l'augmentation se produit dans le domaine de fréquence, et
dans lequel l'augmentation d'au moins une caractéristique consiste à tirer un rapport signal-bruit aléatoire (SNR) d'une distribution SNR (232) et à tirer une forme de spectre de bruit stationnaire aléatoire (233) d'une distribution de formes de spectre de bruit, et à déterminer l'augmentation en tant que bruit dont la puissance en fonction de la fréquence est déterminée à partir du SNR aléatoire tiré et du spectre de bruit stationnaire aléatoire tiré.

2.   Procédé selon la revendication 1, dans lequel différents sous-ensembles des données d'entraînement augmentées (113B) sont générés pendant la boucle d'entraînement (131B), pour être utilisés à différentes époques de la boucle d'entraînement (131B), en augmentant au moins certaines des données d'entraînement (111B) à l'aide de différents ensembles de paramètres d'augmentation calculés à partir d'une pluralité de distributions de probabilité et/ou

dans lequel les données d'entraînement sont indicatives d'une pluralité d'énoncés d'un utilisateur et/ou
dans lequel les bandes de fréquence occupent chacune une proportion constante du spectre Mel ou sont espacées de manière égale en fréquence logarithmique ou sont espacées de manière égale en fréquence logarithmique avec le logarithme mis à l'échelle de telle sorte que les caractéristiques représentent les puissances de bande en décibels (dB).

3.   Procédé selon la revendication 1, dans lequel le modèle acoustique (114B) est un modèle d'analyse de la parole ou un modèle de suppression du bruit.

4.   Procédé selon la revendication 1, dans lequel ladite augmentation inclut au moins l'une des opérations suivantes : ajout d'un bruit stationnaire à spectre fixe, ajout d'un bruit stationnaire à spectre variable, ajout d'un bruit incluant une ou plusieurs tonalités à bande étroite stationnaires aléatoires, ajout d'une réverbération, ajout d'un bruit non stationnaire, ajout de résidus d'écho simulés, simulation d'une égalisation de microphone, simulation d'une coupure de microphone ou variation du niveau de large bande et/ou

dans lequel ladite augmentation est mise en œuvre dans ou sur une ou plusieurs unités de traitement graphique (GPU) et/ou
dans lequel ladite augmentation est effectuée d'une manière déterminée en partie à partir des données d'entraînement (110).

5.   Procédé selon la revendication 1, dans lequel l'entraînement est mis en œuvre par un système de commande, le système de commande inclut un ou plusieurs processeurs et un ou plusieurs dispositifs mettant en œuvre une mémoire non transitoire, l'entraînement inclut la fourniture des données d'entraînement au système de commande, et l'entraînement produit un modèle acoustique entraîné (114B), dans lequel le procédé inclut :
le stockage des paramètres du modèle acoustique entraîné (114B) dans un ou plusieurs des dispositifs.

6.   Système configuré pour l'entraînement d'un modèle acoustique (114B), dans lequel l'entraînement inclut une phase de préparation de données (130B) et une boucle d'entraînement (131B) qui suit la phase de préparation de données (130B), dans lequel la boucle d'entraînement inclut une pluralité d'époques successives, ledit système incluant :

un sous-système de préparation de données, couplé et configuré pour mettre en œuvre la phase de préparation de données (130B), incluant la réception ou la génération de données d'entraînement du domaine temporel (110), dans lequel les données d'entraînement du domaine temporel (110) sont ou incluent au moins un exemple de données audio, le sous-système de préparation de données étant en outre configuré pour extraire au moins une caractéristique (111B) des données d'entraînement du domaine temporel et fournir la au moins une caractéristique (111B) au sous-système d'entraînement ; et
un sous-système d'entraînement, couplé au sous-système de préparation de données et configuré pour augmenter la au moins une caractéristique (111B) pendant chaque époque de la boucle d'entraînement, dans lequel l'augmentation se produit dans au moins un domaine de caractéristique, générant ainsi des données d'entraînement augmentées (113B) qui sont temporaires et utilisées uniquement pendant l'entraînement dans une époque, et pour utiliser au moins certaines des données d'entraînement augmentées (113B) pour l'entraînement du modèle (114B) pendant chaque époque de la boucle d'entraînement,
dans lequel les données d'entraînement (110) sont indicatives de caractéristiques comprenant des bandes de fréquence, et l'augmentation se produit dans le domaine de fréquence, et
dans lequel l'augmentation d'au moins une caractéristique consiste à tirer un rapport signal bruit aléatoire (SNR) d'une distribution SNR (232) et à tirer une forme de spectre de bruit stationnaire aléatoire d'une distribution de formes de spectre de bruit (233), et à déterminer l'augmentation en tant que bruit dont la puissance en fonction de la fréquence est déterminée à partir du SNR aléatoire tiré et du spectre de bruit stationnaire aléatoire tiré.

7. Système selon la revendication 6, dans lequel le sous-système d'entraînement est configuré pour générer, pendant la boucle d'entraînement (131B), différents sous-ensembles des données d'entraînement augmentées (113B), pour être utilisés à différentes époques de la boucle d'entraînement (131B), notamment en augmentant au moins certaines des données d'entraînement (110) à l'aide de différents ensembles de paramètres d'augmentation calculés à partir d'une pluralité de distributions de probabilités et/ou
dans lequel les données d'entraînement sont indicatives d'une pluralité d'énoncés d'un utilisateur.

8. Système selon la revendication 6, dans lequel le modèle acoustique est un modèle d'analyse de la parole ou un modèle de suppression du bruit.

9. Système selon la revendication 6, dans lequel le sous-système d'entraînement est configuré pour l'entraînement d'un réseau neuronal profond (DNN) ou d'un réseau neuronal convolutif (CNN) ou d'un réseau neuronal récurrent (RNN) ou d'un modèle acoustique HMM-GMM.

10. Système selon la revendication 6, dans lequel le sous-système d'entraînement est configuré pour augmenter les données d'entraînement (111B) notamment en effectuant au moins l'une des opérations suivantes : ajout d'un bruit stationnaire à spectre fixe, ajout d'un bruit stationnaire à spectre variable, ajout d'un bruit comprenant une ou plusieurs tonalités stationnaires aléatoires à bande étroite, ajout d'une réverbération, ajout d'un bruit non stationnaire, ajout de résidus d'écho simulés, simulation d'une égalisation de microphone, simulation d'une coupure de microphone ou variation du niveau de large bande et/ou

est mis en œuvre dans ou sur une ou plusieurs unités de traitement graphique (GPU) et/ou
est configuré pour augmenter les données d'entraînement (111B) d'une manière déterminée en partie à partir desdites données d'entraînement.

11. Système selon la revendication 6, dans lequel les bandes de fréquence occupent chacune une proportion constante du spectre Mel, ou sont espacées de manière égale en fréquence logarithmique, ou sont espacées de manière égale en fréquence logarithmique avec la mise à l'échelle logarithmique de telle sorte que les caractéristiques représentent les puissances de bande en décibels (dB).

12. Système selon la revendication 6, dans lequel le sous-système d'entraînement inclut un ou plusieurs processeurs et un ou plusieurs dispositifs mettant en œuvre une mémoire non transitoire, et le sous-système d'entraînement est configuré pour produire un modèle acoustique entraîné et pour stocker des paramètres du modèle acoustique entraîné dans un ou plusieurs des dispositifs.

**FIG. 1**

EP 4 004 906 B1

FIG. 1A
(PRIOR ART)

FIG. 1B

FIG. 2

EP 4 004 906 B1

FIG. 3

FIG. 3A

FIG. 4

FIG. 5

FIG. 6

FIG. 7

EP 4 004 906 B1

EP 4 004 906 B1

FIG. 8

FIG. 9

FIG. 10

EPOCH 1    400

EPOCH 2    401

EPOCH 3    402

EPOCH 4    403

405:
POWER (dB)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019043482 A1

- US 20190362711

**Non-patent literature cited in the description**

- **HOTH, DANIEL**. *The Journal of the Acoustical Society of America*, 1941, vol. 12, 499, https://doi. org/10.1121/1.191629